(19) **Europäisches Patentamt / European Patent Office / Office européen des brevets**

(11) **EP 4 535 741 A1**

(12) **EUROPEAN PATENT APPLICATION**
published in accordance with Art. 153(4) EPC

(43) Date of publication:
09.04.2025 Bulletin 2025/15

(51) International Patent Classification (IPC):
*H04L 27/26* (2006.01)

(21) Application number: 23826071.5

(22) Date of filing: 25.05.2023

(52) Cooperative Patent Classification (CPC):
H04L 27/26; H04W 52/02

(86) International application number:
PCT/CN2023/096402

(87) International publication number:
WO 2023/246422 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.06.2022 CN 202210704831

(71) Applicant: Huawei Technologies Co., Ltd.
Shenzhen, Guangdong 518129 (CN)

(72) Inventors:
• LIU, Rongkuan
Shenzhen, Guangdong 518129 (CN)
• ZHANG, Jiayin
Shenzhen, Guangdong 518129 (CN)

(74) Representative: Pfenning, Meinig & Partner mbB
Patent- und Rechtsanwälte
Theresienhöhe 11a
80339 München (DE)

(54) **DATA PROCESSING METHOD AND DATA PROCESSING DEVICE**

(57) This application provides a data processing method and a data processing apparatus, to reduce a PAPR of a signal sent via a power amplifier, to enhance network coverage or reduce power consumption of a sending apparatus. The method includes: A sending apparatus generates a plurality of modulation symbols, where the plurality of modulation symbols correspond to different time domain units, a same time domain unit corresponds to at least two modulation symbols in the plurality of modulation symbols, and at least two modulation symbols in the plurality of modulation symbols are obtained through modulation based on different modulation constellation diagrams. The sending apparatus generates a first signal based on the plurality of modulation symbols. The sending apparatus sends the first signal, and correspondingly, a receiving apparatus receives the first signal, and processes the first signal.

FIG. 3

## Description

This application claims priority to Chinese Patent Application No. 202210704831.1, filed with the China National Intellectual Property Administration on June 21, 2022 and entitled "DATA PROCESSING METHOD AND DATA PROCESSING APPARATUS", which is incorporated herein by reference in its entirety.

## TECHNICAL FIELD

This application relates to the field of wireless communication, and in particular, to a data processing method and a data processing apparatus.

## BACKGROUND

In the communication field, a sending apparatus sends a signal to a receiving apparatus via a power amplifier. A peak to average power ratio (peak to average power ratio, PAPR) of the signal sent via the power amplifier determines coverage of the signal. In other words, the PAPR of the signal sent via the power amplifier determines power consumption of the sending apparatus. Specifically, a smaller PAPR of the signal sent via the power amplifier indicates a longer coverage distance of the signal or lower power consumption of the sending apparatus; and a larger PAPR of the signal sent via the power amplifier indicates a shorter coverage distance of the signal or higher power consumption of the sending apparatus.

In the communication field, a longer coverage distance of a signal is always expected. In other words, lower power consumption of a sending apparatus is always expected. Therefore, a PAPR of a signal sent via a power amplifier is always expected.

Therefore, how to reduce a PAPR of a signal sent via a power amplifier becomes an urgent problem to be resolved.

## SUMMARY

This application provides a data processing method and a data processing apparatus, to reduce a PAPR of a signal sent via a power amplifier, to enhance network coverage or reduce power consumption of a sending apparatus.

According to a first aspect, a data processing method is provided. The method includes: A sending apparatus generates a plurality of modulation symbols, where the plurality of modulation symbols correspond to different time domain units, a same time domain unit corresponds to at least two modulation symbols in the plurality of modulation symbols, and at least two modulation symbols in the plurality of modulation symbols are obtained through modulation based on different modulation constellation diagrams. The sending apparatus generates a first signal based on the plurality of modulation symbols. The sending apparatus sends the first signal.

That the plurality of modulation symbols correspond to different time domain units may be understood as that the plurality of modulation symbols are in different time domain units, or the plurality of modulation symbols exist in different time domain units, or the plurality of modulation symbols include different time domain units, or the plurality of modulation symbols have different time domain units, or the plurality of modulation symbols are within different time domain units. This is not limited in this embodiment of this application.

That a same time domain unit corresponds to at least two modulation symbols in the plurality of modulation symbols may be understood as that each time domain unit corresponds to at least two modulation symbols in the plurality of modulation symbols, that is, one time domain unit corresponds to at least two modulation symbols.

The sending apparatus may map a bit sequence to a plurality of modulation symbols in different modulation constellation diagrams based on the different modulation constellation diagrams. At least two modulation symbols in the plurality of modulation symbols are modulated based on different modulation constellation diagrams. It should be understood that there are at least two modulation constellation diagrams.

The sending apparatus generates the first signal based on the modulation symbols (namely, the plurality of modulation symbols) in the different time domain units.

A waveform of the first signal may be discrete Fourier transform spread orthogonal frequency division multiplexing (discrete Fourier transform spread orthogonal frequency division multiplexing, DFT-s-ODFM), orthogonal frequency division multiplexing (orthogonal frequency division multiplexing, OFDM), or single carrier quadrature amplitude modulation (single carrier QAM, SC-QAM). This is not limited in this application.

According to the data processing method provided in this application, a same time domain unit corresponds to at least two modulation symbols. In a subsequent process of generating the first signal, a plurality of modulation symbols in one time domain unit may be simultaneously processed. In addition, at least two modulation symbols in the plurality of modulation symbols are obtained through modulation based on different modulation constellation diagrams. A distance between such a modulation symbol and an origin of the modulation constellation diagram is shorter than a distance between a modulation symbol obtained through modulation based on the same modulation constellation diagram and the origin of the modulation constellation diagram. In this modulation method, when the first signal passes through a PA, a PAPR of the first signal is small. This helps enhance network coverage or reduce power consumption of the sending apparatus.

With reference to the first aspect, in some implementations of the first aspect, the at least two modulation symbols obtained through modulation based on the different modulation constellation diagrams in the plurality of modulation symbols correspond to a same time domain unit.

At least two modulation symbols in the plurality of modulation symbols are obtained through modulation based on the different modulation constellation diagrams, and the at least two modulation symbols correspond to a same time domain unit. In other words, at least two modulation symbols in the modulation symbols obtained based on the different modulation constellation diagrams correspond to a same time domain unit. In other words, at least two modulation symbols corresponding to a same time domain unit are obtained through modulation based on different modulation constellation diagrams. A same time domain unit may be understood as one time domain unit.

According to the data processing method provided in this application, at least two modulation symbols corresponding to a same time domain unit are obtained through modulation based on different modulation constellation diagrams, the sending apparatus processes the modulation symbols corresponding to the same time domain unit, and the PAPR of the generated first signal is small when the first signal passes through the PA. This helps enhance the network coverage or reduce the power consumption of the sending apparatus.

With reference to the first aspect, in some implementations of the first aspect, quantities of modulation symbols obtained based on the different modulation constellation diagrams are the same.

When the sending apparatus performs modulation based on the different modulation constellation diagrams, the quantities of modulation symbols obtained based on the different modulation constellation diagrams may be the same.

Optionally, when the sending apparatus performs modulation based on the different modulation constellation diagrams, the quantities of modulation symbols obtained based on the different modulation constellation diagrams may be different. This is not limited in this application.

According to the data processing method provided in this application, the quantities of modulation symbols obtained based on the different modulation constellation diagrams are the same, and such modulation symbols are evenly distributed in the different modulation constellation diagrams. A larger quantity of modulation symbols obtained based on the different modulation constellation diagrams indicates a smaller PAPR of the first signal when the first signal passes through the PA. With reference to the first aspect, in some implementations of the first aspect, the different modulation constellation diagrams include a first modulation constellation diagram, and index values of modulation symbols obtained based on the first modulation constellation diagram are discontinuous.

The first modulation constellation diagram may be any one of the different modulation constellation diagrams, and the index values of the modulation symbols obtained based on the first modulation constellation diagram may be discontinuous. This is not limited in this application.

If the index values of the modulation symbols obtained based on the first modulation constellation diagram are discontinuous, a quantity of modulation symbols obtained based on the first modulation constellation diagram may be the same as or different from a quantity of modulation symbols obtained based on another modulation constellation diagram. The another modulation constellation diagram is a modulation constellation diagram other than the first modulation constellation diagram in the different modulation constellation diagrams.

If the index values of the modulation symbols obtained based on the first modulation constellation diagram are discontinuous, index values of the modulation symbols obtained based on the another modulation constellation diagram may be continuous or discontinuous. This is not limited in this embodiment of this application.

According to the data processing method provided in this application, index values of modulation symbols obtained based on a same modulation constellation diagram are discontinuous, modulation symbols with adjacent index values may be obtained based on different modulation constellation diagrams, and a difference between distances between adjacent modulation symbols and origins of modulation constellation diagrams is small. In this way, when the first signal passes through the PA, the PAPR of the first signal is small. This helps enhance the network coverage or reduce the power consumption of the sending apparatus.

With reference to the first aspect, in some implementations of the first aspect, a correspondence between index values of the different modulation constellation diagrams and index values of the modulation symbols obtained based on the different modulation constellation diagrams satisfies the following formula:

$$\mathrm{mod}(m, \mathrm{X}) = i - 1,$$

where

*m* is the index values of the plurality of modulation symbols, X is a quantity of the different modulation constellation diagrams, X is an integer greater than or equal to 2, mod() is a modulo operation, *i* is the index values of the different modulation constellation diagrams, and *i*={1,...,X}.

According to the data processing method provided in this application, X adj acent modulation symbols are respectively obtained based on the different modulation constellation diagrams, and distances between the X modulation symbols and origins of the modulation constellation diagrams are the smallest. In this way, when the first signal passes through the PA, the PAPR of the first signal is the smallest.

With reference to the first aspect, in some implementations of the first aspect, the at least two modulation symbols obtained through modulation based on the different modulation constellation diagrams in the plurality of modulation symbols correspond to different time domain units.

At least two modulation symbols in the plurality of modulation symbols are obtained through modulation based on the different modulation constellation diagrams, and the at least two modulation symbols correspond to different time domain units. In other words, the at least two modulation symbols obtained based on the different modulation constellation diagrams correspond to different time domain units, and modulation symbols corresponding to a same time domain unit are obtained based on a same modulation constellation diagram. In other words, modulation symbols corresponding to at least two time domain units in different time domain units are obtained through modulation based on the different modulation constellation diagrams.

According to the data processing method provided in this application, modulation symbols corresponding to at least two time domain units in different time domain units are obtained through modulation based on the different modulation constellation diagrams. The sending apparatus processes modulation symbols corresponding to the different time domain units. When the generated first signal passes through the PA, the PAPR of the first signal is small. This helps enhance the network coverage or reduce the power consumption of the sending apparatus.

With reference to the first aspect, in some implementations of the first aspect, at least two modulation symbols in modulation symbols corresponding to different time domain units are obtained through modulation based on the different modulation constellation diagrams, and at least two modulation symbols in modulation symbols corresponding to a same time domain unit are obtained through modulation based on the different modulation constellation diagrams.

In modulation symbols obtained based on the different modulation constellation diagrams, at least two modulation symbols correspond to different time domain units, and at least two modulation symbols correspond to a same time domain unit. In other words, modulation symbols corresponding to a same time domain unit are obtained based on the different modulation constellation diagrams, and modulation symbols corresponding to at least two time domain units in different time domain units are obtained based on the different modulation constellation diagrams.

According to the data processing method provided in this application, modulation symbols corresponding to at least two time domain units in different time domain units are obtained through modulation based on the different modulation constellation diagrams, and modulation symbols corresponding to a same time domain unit are obtained based on the different modulation constellation diagrams. The sending apparatus processes the plurality of modulation symbols. When the generated first signal passes through the PA, the PAPR of the first signal can be reduced. This helps enhance the network coverage or reduce the power consumption of the sending apparatus.

With reference to the first aspect, in some implementations of the first aspect, modulation symbols obtained based on the different modulation constellation diagrams correspond to a same quantity of time domain units.

According to the data processing method provided in this application, modulation symbols obtained based on the different modulation constellation diagrams correspond to the same quantity of time domain units, and a larger quantity of time domain units corresponding to the modulation symbols obtained based on the different modulation constellation diagrams indicates a smaller PAPR of the first signal when the first signal passes through the PA.

With reference to the first aspect, in some implementations of the first aspect, the different modulation constellation diagrams include a first modulation constellation diagram, and index values of time domain units corresponding to modulation symbols obtained based on the first modulation constellation diagram are discontinuous.

According to the data processing method provided in this application, index values of time domain units corresponding to modulation symbols obtained based on a same modulation constellation diagram are discontinuous, modulation symbols corresponding to adjacent time domain units may be obtained based on different modulation constellation diagrams, and a difference between distances between modulation symbols corresponding to adjacent time domain units and origins of modulation constellation diagrams is small. In this way, when the first signal passes through the PA, the PAPR of the first signal is small. This helps enhance the network coverage or reduce the power consumption of the sending apparatus.

With reference to the first aspect, in some implementations of the first aspect, index values of the different modulation constellation diagrams and index values of the different time domain units satisfy the following formula:

$$\mathrm{mod}(l, \mathrm{X}) = i - 1 ,$$

where

*I* is the index values of the different time domain units, X is a quantity of the different modulation constellation diagrams, X is an integer greater than or equal to 2, mod() is a modulo operation, *i* is the index values of the different modulation constellation diagrams, and *i*={1,...,X}.

According to the data processing method provided in this application, X adjacent time domain units are respectively obtained based on the different modulation constellation diagrams, and distances between modulation symbols corresponding to the X time domain units and origins of the modulation constellation diagrams are the smallest. In this way, when the first signal passes through the PA, the PAPR of the first signal is the smallest.

With reference to the first aspect, in some implementations of the first aspect, there is a phase shift between any two modulation constellation diagrams in the different modulation constellation diagrams.

The phase shift may also be referred to as a phase shift angle. This is not limited in this application.

The phase shift angle may be an angle generated by clockwise rotation or counterclockwise rotation of one modulation constellation diagram relative to another modulation constellation diagram. This is not limited in this application.

With reference to the first aspect, in some implementations of the first aspect, a range of the phase shift is ( $-\dfrac{\pi}{2}+2\pi p$ ,$2\pi p$) or ($2\pi p$, $\dfrac{\pi}{2}+2\pi p$ ), where *p* is an integer.

With reference to the first aspect, in some implementations of the first aspect, the phase shift is not equal to $\dfrac{2\pi p}{2^{Q}}$, where *p* is an integer, and *Q* is a modulation order; or the phase shift is not equal to $\dfrac{\pi p}{2}$ .

With reference to the first aspect, in some implementations of the first aspect, the phase shift may include at least one of the following angles:

$$-\frac{\pi}{6}+2\pi p, \quad -\frac{\pi}{3}+2\pi p, \quad \frac{\pi}{6}+2\pi p, \text{ or } \frac{\pi}{3}+2\pi p.$$

With reference to the first aspect, in some implementations of the first aspect, the method further includes: The sending apparatus sends first indication information, where the first indication information indicates the different modulation constellation diagrams.

According to the data processing method provided in this application, the sending apparatus sends, to a receiving apparatus, the indication information indicating the different modulation constellation diagrams, so that the receiving apparatus can determine the different modulation constellation diagrams based on the indication information, and a fixed modulation constellation diagram does not need to be preset. Therefore, flexibility is higher.

With reference to the first aspect, in some implementations of the first aspect, the first indication information includes a phase shift between any two modulation constellation diagrams in the different modulation constellation diagrams.

The sending apparatus sends the phase shift between any two modulation constellation diagrams in the different modulation constellation diagrams to the receiving apparatus, and the receiving apparatus may determine the different modulation constellation diagrams based on the phase shift between any two modulation constellation diagrams, to demodulate modulation symbols.

According to the data processing method provided in this application, the first indication information includes the phase shift between any two modulation constellation diagrams in the different modulation constellation diagrams, so that the different modulation constellation diagrams can be quickly determined. In addition, content included in the first indication information is related to a quantity of modulation constellation diagrams. If the quantity of modulation constellation diagrams is small, the first indication information includes little content, so that a quantity of bytes of the indication information can be reduced, and energy consumption of the sending apparatus can be reduced.

With reference to the first aspect, in some implementations of the first aspect, the first indication information includes phase shifts of modulation constellation diagrams corresponding to the plurality of modulation symbols.

The first indication information includes the phase shifts of the modulation constellation diagrams corresponding to the plurality of modulation symbols. To be specific, the sending apparatus sends a phase shift of each modulation constellation diagram in the plurality of modulation symbols to the receiving apparatus. After receiving the first indication information, the receiving apparatus may determine the modulation constellation diagram corresponding to each modulation symbol, to implement demodulation.

According to the data processing method provided in this application, the first indication information can clearly indicate the modulation constellation diagram corresponding to each modulation symbol. This helps the receiving apparatus quickly demodulate the modulation symbol.

With reference to the first aspect, in some implementations of the first aspect, the first indication information is carried in radio resource control (radio resource control, RRC) signaling, and the RRC signaling further includes indication information of start time of the first signal.

According to the data processing method provided in this application, the first indication information and the indication information of the start time of the first signal are preconfigured, and no indication information needs to be sent. This can save signaling.

With reference to the first aspect, in some implementations of the first aspect, the indication information of the start time of the first signal includes the start time of the first signal or a time offset from the first indication information, and the time offset indicates the start time of the first signal.

That the first indication information includes the start time of the first signal may be understood as a direct indication manner. That the first indication information includes the time offset from the first indication information may be understood as an indirect indication manner. The receiving apparatus may determine the start time of the first signal based on the time offset from the first indication information.

According to the data processing method provided in this application, two manners of indicating the start time of the first signal are provided, and are applicable to more scenarios and more flexible.

With reference to the first aspect, in some implementations of the first aspect, the first indication information is carried in radio resource control RRC signaling. The method further includes: The sending apparatus sends second indication information, where the second indication information includes time at which the first indication information is activated.

According to the data processing method provided in this application, the first indication information is preconfigured, and the time at which the first indication information is activated is dynamically indicated. This can save some signaling and increase some flexibility.

With reference to the first aspect, in some implementations of the first aspect, the second indication information is carried in downlink control information DCI or a media access control protocol-control element MAC-CE.

With reference to the first aspect, in some implementations of the first aspect, the first indication information is carried in downlink control information DCI.

According to the data processing method provided in this application, the first indication information is dynamically indicated, so that flexibility is higher.

With reference to the first aspect, in some implementations of the first aspect, the time domain unit is an orthogonal frequency division multiplexing OFDM symbol, a slot, a subframe, a frame, or a mini-slot.

With reference to the first aspect, in some implementations of the first aspect, the first signal is obtained by performing discrete Fourier transform and/or inverse discrete Fourier transform on the plurality of modulation symbols.

According to a second aspect, a data processing method is provided. The method includes: A receiving apparatus receives a first signal, where the first signal is generated based on a plurality of modulation symbols, the plurality of modulation symbols correspond to different time domain units, a same time domain unit corresponds to at least two modulation symbols in the plurality of modulation symbols, and at least two modulation symbols in the plurality of modulation symbols are obtained through modulation based on different modulation constellation diagrams. The receiving apparatus processes the first signal.

With reference to the second aspect, in some implementations of the second aspect, the at least two modulation symbols obtained through modulation based on the different modulation constellation diagrams in the plurality of modulation symbols correspond to a same time domain unit.

With reference to the second aspect, in some implementations of the second aspect, quantities of modulation symbols obtained based on the different modulation constellation diagrams are the same.

With reference to the second aspect, in some implementations of the second aspect, the different modulation constellation diagrams include a first modulation constellation diagram, and index values of modulation symbols obtained based on the first modulation constellation diagram are discontinuous.

With reference to the second aspect, in some implementations of the second aspect, a correspondence between index values of the different modulation constellation diagrams and index values of the modulation symbols obtained based on the different modulation constellation diagrams satisfies the following formula:

$$\mathrm{mod}(m, \mathrm{X}) = i - 1,$$

where

$m$ is the index values of the plurality of modulation symbols, X is a quantity of the different modulation constellation diagrams, X is an integer greater than or equal to 2, mod() is a modulo operation, $i$ is the index values of the different modulation constellation diagrams, and $i=\{1,...,X\}$.

With reference to the second aspect, in some implementations of the second aspect, the at least two modulation symbols obtained through modulation based on the different modulation constellation diagrams in the plurality of modulation symbols correspond to different time domain units.

With reference to the second aspect, in some implementations of the second aspect, at least two modulation symbols in modulation symbols corresponding to different time domain units are obtained through modulation based on the different modulation constellation diagrams, and at least two modulation symbols in modulation symbols corresponding to a same time domain unit are obtained through modulation based on the different modulation constellation diagrams.

With reference to the second aspect, in some implementations of the second aspect, modulation symbols obtained based on the different modulation constellation diagrams correspond to a same quantity of time domain units.

With reference to the second aspect, in some implementations of the second aspect, the different modulation constellation diagrams include a first modulation constellation diagram, and index values of time domain units corresponding to modulation symbols obtained based on the first modulation constellation diagram are discontinuous.

With reference to the second aspect, in some implementations of the second aspect, index values of the different modulation constellation diagrams and index values of the different time domain units satisfy the following formula:

$$\mathrm{mod}(l, \mathrm{X}) = i - 1,$$

where

$l$ is the index values of the different time domain units, X is a quantity of the different modulation constellation diagrams, X is an integer greater than or equal to 2, mod() is a modulo operation, $i$ is the index values of the different modulation constellation diagrams, and $i=\{1,...,X\}$.

With reference to the second aspect, in some implementations of the second aspect, there is a phase shift between any two modulation constellation diagrams in the different modulation constellation diagrams.

With reference to the second aspect, in some implementations of the second aspect, a range of the phase shift is ($-\dfrac{\pi}{2}+2\pi p$, $2\pi p$) or ($2\pi p$, $\dfrac{\pi}{2}+2\pi p$), where $p$ is an integer.

With reference to the second aspect, in some implementations of the second aspect, the phase shift is not equal to $\dfrac{2\pi p}{2^Q}$, where $p$ is an integer, and $Q$ is a modulation order; or the phase shift is not equal to $\dfrac{\pi p}{2}$.

With reference to the second aspect, in some implementations of the second aspect, the phase shift may include at least one of the following angles:

$$-\frac{\pi}{6}+2\pi p, \quad -\frac{\pi}{3}+2\pi p, \quad \frac{\pi}{6}+2\pi p, \quad \text{or} \quad \frac{\pi}{3}+2\pi p.$$

With reference to the second aspect, in some implementations of the second aspect, the method further includes: The receiving apparatus receives first indication information, where the first indication information indicates the different modulation constellation diagrams.

With reference to the second aspect, in some implementations of the second aspect, the first indication information includes a phase shift between any two modulation constellation diagrams in the different modulation constellation diagrams.

With reference to the second aspect, in some implementations of the second aspect, the first indication information includes phase shifts of modulation constellation diagrams corresponding to the plurality of modulation symbols.

With reference to the second aspect, in some implementations of the second aspect, the first indication information is carried in radio resource control RRC signaling, and the RRC signaling further includes indication information of start time of the first signal.

With reference to the second aspect, in some implementations of the second aspect, the indication information of the start time of the first signal includes the start time of the first signal or a time offset from the first indication information, and the time offset indicates the start time of the first signal.

With reference to the second aspect, in some implementations of the second aspect, the first indication information is carried in radio resource control RRC signaling. The method further includes: The receiving apparatus receives second indication information, where the second indication information includes time at which the first indication information is activated.

With reference to the second aspect, in some implementations of the second aspect, the second indication information is carried in downlink control information DCI or a media access control protocol-control element MAC-CE.

With reference to the second aspect, in some implementations of the second aspect, the first indication information is carried in downlink control information DCI.

With reference to the second aspect, in some implementations of the second aspect, the time domain unit is an orthogonal frequency division multiplexing OFDM symbol, a slot, a subframe, a frame, or a mini-slot.

With reference to the second aspect, in some implementations of the second aspect, the first signal is obtained by performing discrete Fourier transform and/or inverse discrete Fourier transform on the plurality of modulation symbols.

According to a third aspect, a data processing apparatus is provided, and may also be referred to as a communication apparatus. The apparatus includes a processing unit and a transceiver unit. The processing unit is configured to: generate a plurality of modulation symbols, where the plurality of modulation symbols correspond to different time domain units, a same time domain unit corresponds to at least two modulation symbols in the plurality of modulation symbols, and at least two modulation symbols in the plurality of modulation symbols are obtained through modulation based on different modulation constellation diagrams; and generate a first signal based on the plurality of modulation symbols. The transceiver unit is configured to send the first signal.

With reference to the third aspect, in some implementations of the third aspect, the at least two modulation symbols obtained through modulation based on the different modulation constellation diagrams in the plurality of modulation symbols correspond to a same time domain unit.

With reference to the third aspect, in some implementations of the third aspect, quantities of modulation symbols obtained based on the different modulation constellation diagrams are the same.

With reference to the third aspect, in some implementations of the third aspect, the different modulation constellation diagrams include a first modulation constellation diagram, and index values of modulation symbols obtained based on the first modulation constellation diagram are discontinuous.

With reference to the third aspect, in some implementations of the third aspect, a correspondence between index values of the different modulation constellation diagrams and index values of the modulation symbols obtained based on the different modulation constellation diagrams satisfies the following formula:

$$\mathrm{mod}(m,\mathrm{X})=i-1,$$

where

$m$ is the index values of the plurality of modulation symbols, X is a quantity of the different modulation constellation diagrams, X is an integer greater than or equal to 2, mod() is a modulo operation, $i$ is the index values of the different modulation constellation diagrams, and $i=\{1,...,X\}$.

With reference to the third aspect, in some implementations of the third aspect, the at least two modulation symbols in the plurality of modulation symbols correspond to different time domain units.

With reference to the third aspect, in some implementations of the third aspect, at least two modulation symbols in modulation symbols corresponding to different time domain units are obtained through modulation based on the different modulation constellation diagrams, and at least two modulation symbols in modulation symbols corresponding to a same time domain unit are obtained through modulation based on the different modulation constellation diagrams.

With reference to the third aspect, in some implementations of the third aspect, modulation symbols obtained based on the different modulation constellation diagrams correspond to a same quantity of time domain units.

With reference to the third aspect, in some implementations of the third aspect, the different modulation constellation diagrams include a first modulation constellation diagram, and index values of time domain units corresponding to modulation symbols obtained based on the first modulation constellation diagram are discontinuous.

With reference to the third aspect, in some implementations of the third aspect, index values of the different modulation constellation diagrams and index values of the different time domain units satisfy the following formula:

$$\mathrm{mod}(l,\mathrm{X})=i-1,$$

where

$l$ is the index values of the different time domain units, X is a quantity of the different modulation constellation diagrams, X is an integer greater than or equal to 2, mod() is a modulo operation, $i$ is the index values of the different modulation constellation diagrams, and $i=\{1,...,X\}$.

With reference to the third aspect, in some implementations of the third aspect, there is a phase shift between any two modulation constellation diagrams in the different modulation constellation diagrams.

With reference to the third aspect, in some implementations of the third aspect, a range of the phase shift is (

$$-\frac{\pi}{2}+2\pi p$$

, $2\pi p$) or ($2\pi p$, $\frac{\pi}{2}+2\pi p$ ), where $p$ is an integer.

With reference to the third aspect, in some implementations of the third aspect, the phase shift is not equal to $\frac{2\pi p}{2^Q}$ , where $p$ is an integer, and $Q$ is a modulation order; or the phase shift is not equal to $\frac{\pi p}{2}$ .

With reference to the third aspect, in some implementations of the third aspect, the phase shift may include at least one of the following angles:

$$-\frac{\pi}{6}+2\pi p \quad , \quad -\frac{\pi}{3}+2\pi p \quad , \quad \frac{\pi}{6}+2\pi p \quad , \text{ or } \quad \frac{\pi}{3}+2\pi p \quad .$$

With reference to the third aspect, in some implementations of the third aspect, the transceiver unit is further configured to send first indication information, where the first indication information indicates the different modulation constellation diagrams.

With reference to the third aspect, in some implementations of the third aspect, the first indication information includes a phase shift between any two modulation constellation diagrams in the different modulation constellation diagrams.

With reference to the third aspect, in some implementations of the third aspect, the first indication information includes phase shifts of modulation constellation diagrams corresponding to the plurality of modulation symbols.

With reference to the third aspect, in some implementations of the third aspect, the first indication information is carried in radio resource control RRC signaling, and the RRC signaling further includes indication information of start time of the first signal.

With reference to the third aspect, in some implementations of the third aspect, the indication information of the start time of the first signal includes the start time of the first signal or a time offset from the first indication information, and the time offset indicates the start time of the first signal.

With reference to the third aspect, in some implementations of the third aspect, the first indication information is carried in radio resource control RRC signaling; and the transceiver unit is further configured to send second indication information, where the second indication information includes time at which the first indication information is activated.

With reference to the third aspect, in some implementations of the third aspect, the second indication information is carried in downlink control information DCI or a media access control protocol-control element MAC-CE.

With reference to the third aspect, in some implementations of the third aspect, the first indication information is carried in downlink control information DCI.

With reference to the third aspect, in some implementations of the third aspect, the time domain unit is an orthogonal frequency division multiplexing OFDM symbol, a slot, a subframe, a frame, or a mini-slot.

With reference to the third aspect, in some implementations of the third aspect, the first signal is obtained by performing discrete Fourier transform and/or inverse discrete Fourier transform on the plurality of modulation symbols.

According to a fourth aspect, a data processing apparatus is provided. The apparatus includes a transceiver unit and a processing unit. The transceiver unit is configured to receive a first signal, where the first signal is generated based on a plurality of modulation symbols, the plurality of modulation symbols correspond to different time domain units, a same time domain unit corresponds to at least two modulation symbols in the plurality of modulation symbols, and at least two modulation symbols in the plurality of modulation symbols are obtained through modulation based on different modulation constellation diagrams. The processing unit is configured to process the first signal.

With reference to the fourth aspect, in some implementations of the fourth aspect, the at least two modulation symbols obtained through modulation based on the different modulation constellation diagrams in the plurality of modulation symbols correspond to a same time domain unit.

With reference to the fourth aspect, in some implementations of the fourth aspect, quantities of modulation symbols obtained based on the different modulation constellation diagrams are the same.

With reference to the fourth aspect, in some implementations of the fourth aspect, the different modulation constellation diagrams include a first modulation constellation diagram, and index values of modulation symbols obtained based on the first modulation constellation diagram are discontinuous.

With reference to the fourth aspect, in some implementations of the fourth aspect, a correspondence between index values of the different modulation constellation diagrams and index values of the modulation symbols obtained based on the different modulation constellation diagrams satisfies the following formula:

$$\mathrm{mod}(m, \mathrm{X}) = i - 1$$

,

where

$m$ is the index values of the plurality of modulation symbols, X is a quantity of the different modulation constellation diagrams, X is an integer greater than or equal to 2, mod() is a modulo operation, $i$ is the index values of the different modulation constellation diagrams, and $i=\{1,...,X\}$.

With reference to the fourth aspect, in some implementations of the fourth aspect, the at least two modulation symbols obtained through modulation based on the different modulation constellation diagrams in the plurality of modulation symbols correspond to different time domain units.

With reference to the fourth aspect, in some implementations of the fourth aspect, at least two modulation symbols in modulation symbols corresponding to different time domain units are obtained through modulation based on the different modulation constellation diagrams, and at least two modulation symbols in modulation symbols corresponding to a same time domain unit are obtained through modulation based on the different modulation constellation diagrams.

With reference to the fourth aspect, in some implementations of the fourth aspect, modulation symbols obtained based on the different modulation constellation diagrams correspond to a same quantity of time domain units.

With reference to the fourth aspect, in some implementations of the fourth aspect, the different modulation constellation diagrams include a first modulation constellation diagram, and index values of time domain units corresponding to modulation symbols obtained based on the first modulation constellation diagram are discontinuous.

With reference to the fourth aspect, in some implementations of the fourth aspect, index values of the different modulation constellation diagrams and index values of the different time domain units satisfy the following formula:

$$\mathrm{mod}(l, \mathrm{X}) = i - 1$$

,

where

$l$ is the index values of the different time domain units, X is a quantity of the different modulation constellation diagrams, X is an integer greater than or equal to 2, mod() is a modulo operation, $i$ is the index values of the different modulation constellation diagrams, and $i=\{1,...,X\}$.

With reference to the fourth aspect, in some implementations of the fourth aspect, there is a phase shift between any two modulation constellation diagrams in the different modulation constellation diagrams.

With reference to the fourth aspect, in some implementations of the fourth aspect, a range of the phase shift is ( $-\dfrac{\pi}{2} + 2\pi p$, $2\pi p$) or ($2\pi p$, $\dfrac{\pi}{2} + 2\pi p$ ), where $p$ is an integer.

With reference to the fourth aspect, in some implementations of the fourth aspect, the phase shift is not equal to $\dfrac{2\pi p}{2^Q}$, where $p$ is an integer, and $Q$ is a modulation order; or the phase shift is not equal to $\dfrac{\pi p}{2}$ .

With reference to the fourth aspect, in some implementations of the fourth aspect, the phase shift may include at least one of the following angles:

$$-\frac{\pi}{6} + 2\pi p , \quad -\frac{\pi}{3} + 2\pi p , \quad \frac{\pi}{6} + 2\pi p , \text{ or } \frac{\pi}{3} + 2\pi p .$$

With reference to the fourth aspect, in some implementations of the fourth aspect, the transceiver unit is further configured to receive first indication information, where the first indication information indicates the different modulation constellation diagrams.

With reference to the fourth aspect, in some implementations of the fourth aspect, the first indication information includes a phase shift between any two modulation constellation diagrams in the different modulation constellation diagrams.

With reference to the fourth aspect, in some implementations of the fourth aspect, the first indication information includes phase shifts of modulation constellation diagrams corresponding to the plurality of modulation symbols.

With reference to the fourth aspect, in some implementations of the fourth aspect, the first indication information is carried in radio resource control RRC signaling, and the RRC signaling further includes indication information of start time of the first signal.

With reference to the fourth aspect, in some implementations of the fourth aspect, the indication information of the start time of the first signal includes the start time of the first signal or a time offset from the first indication information, and the time offset indicates the start time of the first signal.

With reference to the fourth aspect, in some implementations of the fourth aspect, the first indication information is carried in radio resource control RRC signaling; and the transceiver unit is further configured to receive second indication information, where the second indication information includes time at which the first indication information is activated.

With reference to the fourth aspect, in some implementations of the fourth aspect, the second indication information is carried in downlink control information DCI or a media access control protocol-control element MAC-CE.

With reference to the fourth aspect, in some implementations of the fourth aspect, the first indication information is carried in downlink control information DCI.

With reference to the fourth aspect, in some implementations of the fourth aspect, the time domain unit is an orthogonal frequency division multiplexing OFDM symbol, a slot, a subframe, a frame, or a mini-slot.

With reference to the fourth aspect, in some implementations of the fourth aspect, the first signal is obtained by performing discrete Fourier transform and/or inverse discrete Fourier transform on the plurality of modulation symbols.

According to a fifth aspect, a communication apparatus is provided, including a processor and a memory. The memory is configured to store a computer program. The processor is configured to call the computer program from the memory and run the computer program, so that the apparatus performs the method according to any possible implementation of any one of the foregoing aspects.

Optionally, there are one or more processors, and there are one or more memories.

Optionally, the memory may be integrated with the processor, or the memory and the processor are separately disposed.

Optionally, the communication apparatus further includes a transmitting machine (transmitter) and a receiving machine (receiver). The transmitting machine and the receiving machine may be separately disposed, or may be integrated together to be referred to as a transceiver machine (transceiver).

According to a sixth aspect, this application provides a processor, including an input circuit, an output circuit, and a processing circuit. The processing circuit is configured to: receive a signal through the input circuit, and transmit a signal through the output circuit, so that the processor performs the method according to any possible implementation of any one of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a seventh aspect, a computer-readable storage medium is provided. The computer-readable storage medium stores a computer program (which may also be referred to as code or instructions). When the computer program is run on a computer, the computer is enabled to perform the method according to any possible implementation of any one of the foregoing aspects.

According to an eighth aspect, a computer program product is provided. The computer program product includes a computer program (which may also be referred to as code or instructions). When the computer program is run, a computer is enabled to perform the method according to any possible implementation of any one of the foregoing aspects.

According to a ninth aspect, a communication apparatus is provided, including units or modules configured to perform the method according to any possible implementation of the first aspect, or including units or modules configured to perform the method according to any possible implementation of the second aspect.

According to a tenth aspect, a communication system is provided, including the data processing apparatus according to the third aspect and the data processing apparatus according to the fourth aspect.

**BRIEF DESCRIPTION OF DRAWINGS**

FIG. 1 is a diagram of a communication system to which an embodiment of this application is applicable;

FIG. 2 is a schematic flowchart of a data processing method;

FIG. 3 is a schematic flowchart of a data processing method according to an embodiment of this application;

FIG. 4 is a diagram of modulation symbols corresponding to one time domain unit according to an embodiment of this application;

FIG. 5 is a diagram of modulation symbols corresponding to different time domain units according to an embodiment of this application;

FIG. 6 is a diagram of modulation symbols corresponding to different time domain units and a same time domain unit according to an embodiment of this application;

FIG. 7 is a diagram of different modulation constellation diagrams according to an embodiment of this application;

FIG. 8 is block diagram of a data processing apparatus according to an embodiment of this application; and

FIG. 9 is block diagram of another data processing apparatus according to an embodiment of this application.

**DESCRIPTION OF EMBODIMENTS**

The following describes technical solutions of this application with reference to accompanying drawings.

The technical solutions in embodiments of this application may be applied to various communication systems, for example, a wireless local area network (wireless local area network, WLAN) communication system, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, a worldwide interoperability for microwave access (worldwide interoperability for microwave access, WiMAX) communication system, and another evolved communication system. The 5G system usually includes the following three major application scenarios: enhanced mobile broadband (enhanced mobile broadband, eMBB), ultra-reliable and low-latency communication (ultra-reliable and low-latency communication, URLLC), and massive machine-type communications (massive machine-type communications, mMTC), and various future communication systems, for example, a 6G system.

A terminal device in embodiments of this application may also be referred to as user equipment (UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user device, or the like.

The terminal device may be a device that provides voice/data connectivity for a user, for example, a handheld device or a vehicle-mounted device that has a wireless connection function. Currently, examples of some terminals are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, an uncrewed aerial vehicle, a terminal device in a 5G network or a future 6G network, or a terminal device in a future evolved public land mobile network (public land mobile network, PLMN). This is not limited in embodiments of this application.

In addition, in embodiments of this application, the terminal device may alternatively be a terminal device in an internet of things (internet of things, IoT) system. The IoT is an important part of future development of information technologies. A main technical feature of the IoT is to connect things to a network by using a communication technology to implement an intelligent network for interconnection between a person and a machine or between things.

In addition, a network device in embodiments of this application may be a device configured to communicate with the terminal device. The network device may also be referred to as an access network device or a radio access network device, may be a transmission reception point (transmission reception point, TRP), or may be an evolved NodeB (evolved NodeB, eNB, or eNodeB) in an LTE system, or may be a home NodeB (for example, a home evolved NodeB, or a home NodeB, HNB), a baseband unit (baseband unit, BBU), or may be a radio controller in a cloud radio access network (cloud radio access network, CRAN) scenario. Alternatively, the network device may be a relay station, an access point, a vehicle-mounted device, a wearable device, a network device in a 5G network or a future 6G network, a network device in a future evolved PLMN network, or the like, may be an access point (access point, AP) in a WLAN, may be a gNB in a new radio (new radio, NR) system, may be a satellite base station in a satellite communication system, or may be a device that bears a base station function and that has various forms, or the like. This is not limited in embodiments of this application.

In a network structure, the network device may include a central unit (central unit, CU) node or a distributed unit (distributed unit, DU) node, a RAN device including a CU node and a DU node, or a RAN device including a control plane CU node (CU-CP node), a user plane CU node (CU-UP node), and a DU node.

The network device provides a service for a cell, and the terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-speed data transmission service.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry an instruction and/or data.

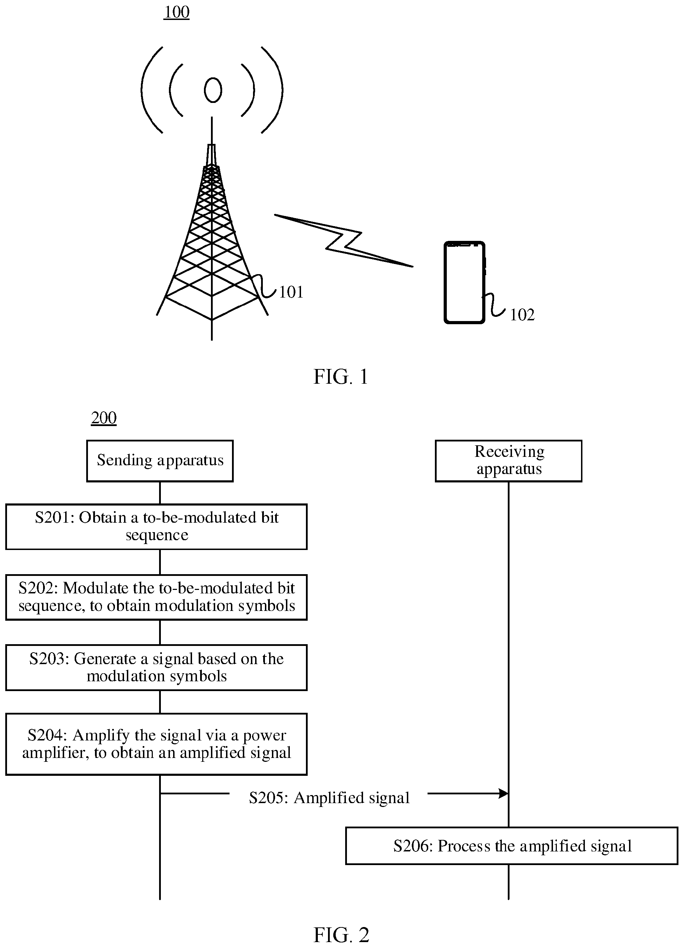

For ease of understanding of embodiments of this application, a communication system 100 applicable to embodiments of this application is first described in detail with reference to FIG. 1.

The communication system 100 includes a network device 101 and a terminal device 102. The network device 101 may be used as a sending apparatus to send control information and/or a transport block to the terminal device 102 via a signal. The terminal device 102 may also be used as a sending apparatus to send control information and/or a transport block to the network device 101. In this scenario, there may be one or more terminal devices. This is not limited in embodiments of this application.

Embodiments of this application may be applied to multiple different scenarios, including but not limited to the scenario shown in FIG. 1. For example, for uplink transmission, the terminal device may be used as a sending apparatus, and the network device may be used as a receiving apparatus. For downlink transmission, the network device may be used as a sending apparatus, and the terminal device may be used as a receiving apparatus. In another scenario, for example, for transmission between network devices, one of the network devices may be used as a sending apparatus, and the other network device may be used as a receiving apparatus. For another example, for transmission between terminal devices, one of the terminal devices may be used as a sending apparatus, and the other terminal device may be used as a receiving apparatus. Therefore, the following describes embodiments of this application based on a sending apparatus and a receiving apparatus.

FIG. 2 is a schematic flowchart of a data processing method 200. The sending apparatus and the receiving apparatus may perform data processing and data transmission according to the method shown in FIG. 2. As shown in FIG. 2, the method 200 may include the following steps.

S201: The sending apparatus obtains a to-be-modulated bit sequence.

The to-be-modulated bit sequence may be understood as a to-be-transmitted bit sequence. A to-be-transmitted bit sequence needs to be modulated before being transmitted, and the sending apparatus may modulate the to-be-transmitted bit sequence. Therefore, the to-be-transmitted bit sequence may be referred to as a to-be-modulated bit sequence. Alternatively, S201 may be described as follows: The sending apparatus obtains a bit sequence.

S202: The sending apparatus modulates the to-be-modulated bit sequence to obtain modulation symbols.

In a communication technology, a function of modulation is to map input bits to modulation symbols as an output. The sending apparatus may modulate the to-be-modulated bit sequence based on an existing modulation method, to obtain the modulation symbols.

When a modulation order is q, the sending apparatus may map every q bits in the to-be-modulated bit sequence to one modulation symbol based on a modulation constellation diagram.

If a modulation scheme is binary phase shift keying (binary phase shift keying, BPSK), the modulation order may be 1. If the modulation scheme is quadrature phase shift keying (quadrature phase shift keying, QPSK), the modulation order may be 2. If the modulation scheme is 16 quadrature amplitude modulation (quadrature amplitude modulation, QAM), the modulation order may be 4. If the modulation scheme is $2^q$-QAM, the modulation order may be q. Similarly, S202 may be described as: The sending apparatus modulates the bit sequence to obtain modulation symbols.

S203: The sending apparatus generates a signal based on the modulation symbols.

The sending apparatus may generate the signal based on the modulation symbols according to an existing method.

S204: The sending apparatus amplifies the signal via a power amplifier (power amplifier, PA), to obtain an amplified signal.

S205: The sending apparatus sends the amplified signal to the receiving apparatus, and correspondingly, the receiving apparatus receives the amplified signal.

S206: The receiving apparatus processes the amplified signal.

In the method 200, when the PA sends the signal, a peak to average power ratio (peak to average power ratio, PAPR) of the signal sent via the power amplifier determines coverage of the signal. In other words, the PAPR of the signal sent via the power amplifier determines power consumption of the power amplifier. Specifically, a smaller PAPR of the signal sent via the power amplifier indicates a longer coverage distance of the signal or lower power consumption of the power amplifier; and a larger PAPR of the signal sent via the power amplifier indicates a shorter coverage distance of the signal or higher power consumption of the power amplifier.

In the communication field, a coverage distance of a signal is certainly as far as possible. In other words, power consumption of a power amplifier is as low as possible. Therefore, a PAPR of a signal sent via a power amplifier is as small as possible.

In view of this, embodiments of this application provide a data processing method and a data processing apparatus, so that when a power amplifier sends a signal, a PAPR of the signal sent via the power amplifier can be reduced, to enhance network coverage or reduce power consumption of a sending apparatus.

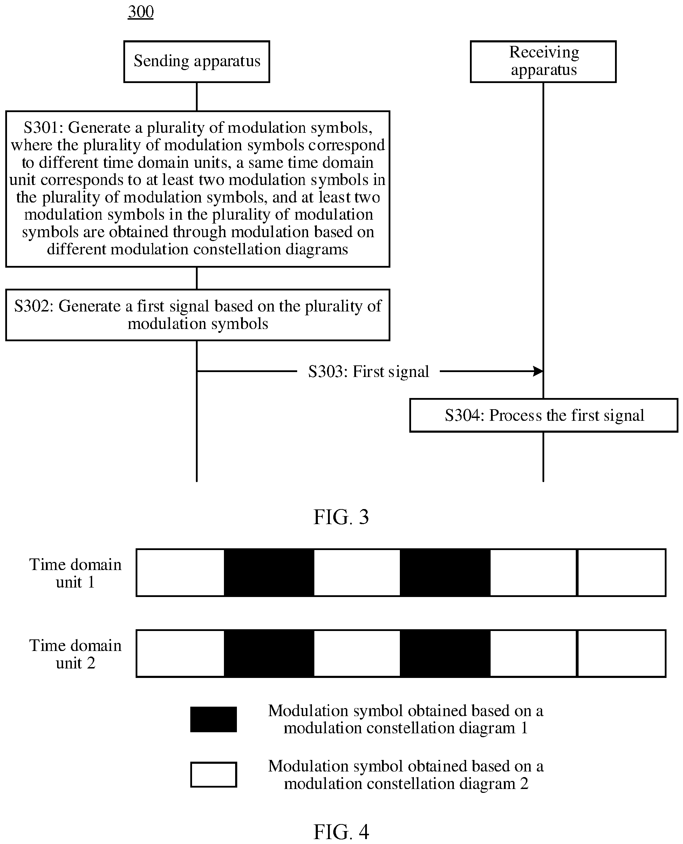

FIG. 3 is a schematic flowchart of a data processing method 300 according to an embodiment of this application. The method 300 may be performed by a sending apparatus, for example, the network device 101 or the terminal device 102. As shown in FIG. 3, the method 300 may include the following steps.

S301: The sending apparatus generates a plurality of modulation symbols, where the plurality of modulation symbols correspond to different time domain units, a same time domain unit corresponds to at least two modulation symbols in the plurality of modulation symbols, and at least two modulation symbols in the plurality of modulation symbols are obtained through modulation based on different modulation constellation diagrams.

The modulation symbol may also be referred to as a complex modulation symbol. This is not limited in this embodiment of this application.

That the plurality of modulation symbols correspond to different time domain units may be understood as that the plurality of modulation symbols are in different time domain units, or the plurality of modulation symbols exist in different time domain units, or the plurality of modulation symbols include different time domain units, or the plurality of modulation symbols have different time domain units, or the plurality of modulation symbols are within different time domain units. This is not limited in this embodiment of this application.

That a same time domain unit corresponds to at least two modulation symbols in the plurality of modulation symbols may be understood as that each time domain unit corresponds to at least two modulation symbols in the plurality of modulation symbols, that is, one time domain unit corresponds to at least two modulation symbols.

The at least two modulation symbols obtained based on the different modulation constellation diagrams may correspond to a same time domain unit, or may correspond to different time domain units. This is not limited in this embodiment of this application. In modulation symbols obtained based on the different modulation constellation diagrams, at least two modulation symbols may correspond to a same time domain unit, or at least two modulation symbols may correspond to different time domain units. This is not limited in this embodiment of this application.

It should be noted that quantities of modulation symbols corresponding to different time domain units may be the same or may be different. This is not limited in this embodiment of this application.

Optionally, the time domain unit may be an orthogonal frequency division multiplexing (orthogonal frequency division multiplexing, OFDM) symbol, a slot, a subframe, a frame, or a mini-slot. This is not limited in this embodiment of this application.

The sending apparatus may map a bit sequence to a plurality of modulation symbols in different modulation constellation diagrams based on the different modulation constellation diagrams. At least two modulation symbols in the plurality of modulation symbols are modulated based on different modulation constellation diagrams. It should be understood that there are at least two modulation constellation diagrams.

S302: The sending apparatus generates a first signal based on the plurality of modulation symbols.

The first signal may also be referred to as a first physical channel. This is not limited in this embodiment of this application.

The first signal may include at least one of a control channel, a data channel, or a reference signal. The control channel may include at least one of a physical downlink control channel (physical downlink control channel, PDCCH), a physical uplink control channel (physical uplink control channel, PUCCH), or a physical sidelink control channel (physical sidelink control channel, PSCCH). The data channel includes at least one of a physical downlink shared channel (physical downlink shared channel, PDSCH), a physical uplink shared channel (physical uplink shared channel, PUSCH), or a physical sidelink shared channel (physical sidelink shared channel, PSSCH). The reference signal includes at least one of a downlink reference signal, an uplink reference signal, or a sidelink reference signal.

The sending apparatus generates the first signal based on the modulation symbols (namely, the plurality of modulation symbols) in the different time domain units.

Optionally, the sending apparatus may perform discrete Fourier transform (discrete Fourier transform, DFT) and/or inverse discrete Fourier transform (inverse discrete Fourier transform, IDFT) on modulation symbols in the different time domain units, to obtain the first signal. A fast algorithm of IDFT is inverse fast Fourier transform (inverse fast Fourier transform, IFFT). The sending apparatus may alternatively perform IFFT processing on the modulation symbols in the different time domain units. This is not limited in this embodiment of this application.

A waveform of the first signal may be discrete Fourier transform spread orthogonal frequency division multiplexing (discrete Fourier transform spread orthogonal frequency division multiplexing, DFT-s-ODFM), orthogonal frequency division multiplexing (orthogonal frequency division multiplexing, OFDM), or single carrier quadrature amplitude modulation (single carrier QAM, SC-QAM). This is not limited in this embodiment of this application.

If the sending apparatus performs IDFT processing after performing DFT on the modulation symbols in the different time domain units, a waveform of the obtained first signal is DFT-s-ODFM. If the sending apparatus performs IDFT processing on the modulation symbols in the different time domain units, a waveform of the obtained first signal is OFDM. If the sending apparatus performs quadrature amplitude modulation processing on the modulation symbols in the different time domain units, a waveform of the obtained first signal is SC-QAM.

S303: The sending apparatus sends the first signal, and correspondingly, the receiving apparatus receives the first signal.

S304: The receiving apparatus processes the first signal.

The receiving apparatus may first process the first signal to obtain a plurality of modulation symbols, and then demodulate the plurality of modulation symbols based on different modulation constellation diagrams.

The receiving apparatus may demodulate the plurality of modulation symbols based on preset different modulation constellation diagrams, or may demodulate the plurality of modulation symbols based on modulation constellation diagrams indicated by the sending apparatus. This is not limited in this embodiment of this application.

According to the data processing method provided in this embodiment of this application, a same time domain unit corresponds to at least two modulation symbols. In a subsequent process of generating the first signal, a plurality of modulation symbols in one time domain unit may be simultaneously processed. In addition, at least two modulation symbols in the plurality of modulation symbols are obtained through modulation based on different modulation constellation diagrams. In this modulation method, when the first signal passes through a PA, a PAPR of the first signal is small. This helps enhance network coverage or reduce power consumption of the sending apparatus.

At least two modulation symbols in the plurality of modulation symbols are obtained through modulation based on the different modulation constellation diagrams, and there may be three possible cases about a correspondence between the at least two modulation symbols and time domain units.

**In a first possible case,** the at least two modulation symbols obtained through modulation based on the different modulation constellation diagrams in the plurality of modulation symbols correspond to a same time domain unit.

At least two modulation symbols in the plurality of modulation symbols are obtained through modulation based on the different modulation constellation diagrams, and the at least two modulation symbols correspond to a same time domain unit. In other words, at least two modulation symbols in the modulation symbols obtained based on the different modulation constellation diagrams correspond to a same time domain unit. In other words, at least two modulation symbols corresponding to a same time domain unit are obtained through modulation based on different modulation constellation diagrams. A same time domain unit may be understood as one time domain unit.

For example, FIG. 4 is a diagram of modulation symbols corresponding to one time domain unit. As shown in FIG. 4, there are two time domain units, each time domain unit corresponds to six modulation symbols, there are two different modulation constellation diagrams, and the two modulation constellation diagrams are a modulation constellation diagram 1 and a modulation constellation diagram 2. In the figure, modulation symbols filled with black are obtained based on the modulation constellation 1, and modulation symbols filled with white are obtained based on the modulation constellation diagram 2. In other words, six modulation symbols in the modulation symbols obtained based on the different modulation constellation diagrams correspond to the same time domain unit (a time domain unit 1 or a time domain unit 2). Characteristics of modulation symbols corresponding to different time domain units are the same.

In different time domain units, at least two modulation symbols corresponding to only one time domain unit may be obtained through modulation based on different modulation constellation diagrams, or at least two modulation symbols corresponding to each of two or more time domain units may be obtained through modulation based on different modulation constellation diagrams. This is not limited in this embodiment of this application.

According to the data processing method provided in this embodiment of this application, at least two modulation symbols corresponding to a same time domain unit are obtained through modulation based on different modulation constellation diagrams, the sending apparatus processes the modulation symbols corresponding to the same time domain unit, and the PAPR of the generated first signal is small when the first signal passes through the PA. This helps enhance the network coverage or reduce the power consumption of the sending apparatus.

Optionally, in a same time domain unit, quantities of modulation symbols obtained based on different modulation constellation diagrams are the same or different.

When the sending apparatus performs modulation based on different modulation constellation diagrams, quantities of modulation symbols obtained based on the different modulation constellation diagrams may be the same, or quantities of modulation symbols obtained based on the different modulation constellation diagrams may be different. This is not limited in this embodiment of this application.

For example, one time domain unit corresponds to 10 modulation symbols, and there are two modulation constellation diagrams: a modulation constellation diagram 1 and a modulation constellation diagram 2. In a possible implementation, a quantity of modulation symbols obtained based on the modulation constellation diagram 1 may be the same as a quantity of modulation symbols obtained based on the modulation constellation diagram 2, that is, 5. In another possible implementation, a quantity of modulation symbols obtained based on the modulation constellation diagram 1 may be different from a quantity of modulation symbols obtained based on the modulation constellation diagram 2. For example, the quantity of modulation symbols obtained based on the modulation constellation diagram 1 may be 3, and a quantity of modulation symbols obtained based on the modulation constellation diagram 2 may be 7.

Optionally, the different modulation constellation diagrams include a first modulation constellation diagram, and index values of modulation symbols obtained based on the first modulation constellation diagram are continuous or discontinuous.

Index values of modulation symbols may be used to distinguish between the modulation symbols, and the index values of the modulation symbols may be integers greater than or equal to 0.

The first modulation constellation diagram may be any one of the different modulation constellation diagrams, and the index values of the modulation symbols obtained based on the first modulation constellation diagram may be continuous or discontinuous. This is not limited in this embodiment of this application.

If the index values of the modulation symbols obtained based on the first modulation constellation diagram are continuous, a quantity of modulation symbols obtained based on the first modulation constellation diagram may be the same as or different from a quantity of modulation symbols obtained based on another modulation constellation diagram. The another modulation constellation diagram is a modulation constellation diagram other than the first modulation constellation diagram in the different modulation constellation diagrams.

If the index values of the modulation symbols obtained based on the first modulation constellation diagram are discontinuous, a quantity of modulation symbols obtained based on the first modulation constellation diagram may be the same as or different from a quantity of modulation symbols obtained based on another modulation constellation diagram.

If the index values of the modulation symbols obtained based on the first modulation constellation diagram are continuous, index values of the modulation symbols obtained based on the another modulation constellation diagram may be continuous or discontinuous. This is not limited in this embodiment of this application.

Optionally, when the index values of the modulation symbols obtained based on the different modulation constellation diagrams are discontinuous, a correspondence between index values i of the different modulation constellation diagrams and index values $m$ of the modulation symbols obtained based on the different modulation constellation diagrams may satisfy the following formula:

$$\mathrm{mod}(m, \mathrm{X}) = i - 1,$$

where

$m$ is the index values of the plurality of modulation symbols, X is a quantity of the different modulation constellation diagrams, X is an integer greater than or equal to 2, mod() is a modulo operation, $i$ is the index values of the different modulation constellation diagrams, and $i=\{1...,X\}$.

For example, if one time domain unit corresponds to M modulation symbols, M is an integer greater than or equal to 2, the M modulation symbols may be respectively $d_0, d_1, d_2, ..., d_{M-1}$, the M modulation symbols are obtained based on different modulation constellation diagrams, and modulation symbols obtained based on any modulation constellation diagram in the different modulation constellation diagrams may form a set, a quantity of sets is the same as a quantity of different modulation constellation diagrams. If the quantity of different modulation constellation diagrams is X, the quantity of sets is X, and the X sets may be respectively $\Omega_1, \Omega_2, ..., \Omega_X$, where each set is a non-empty set, $\Omega_a \cap \Omega_b = \emptyset$, and $\Omega_1 \cup \Omega_2 \cup ... \cup \Omega_X = \{d_0, d_3, d_2, ..., d_{M-1}\}$. $a \neq b$, $1 \leq a \leq X$, and $1 \leq b \leq X$.

In a possible implementation, the M modulation symbols are evenly allocated to the sets, and index values of modulation symbols in each set are continuous. To be specific, quantities of modulation symbols obtained based on the different modulation constellation diagrams are the same, and index values of modulation symbols obtained based on the different modulation constellation diagrams are continuous.

If M=72 and X=3, each of the three sets may include 24 modulation symbols, and index values of the 24 modulation symbols are continuous. The three sets may be respectively $\Omega_1=\{d_0,d_1,d_2,...,d_{23}\}$, $\Omega_2=\{d_{24},d_{25},d_{26},...,d_{47}\}$, and $\Omega_3=\{d_{48},d_{49},d_{50},...,d_{71}\}$.

The three modulation constellation diagrams may be respectively a modulation constellation diagram 1, a modulation constellation diagram 2, and a modulation constellation diagram 3. The modulation symbols in $\Omega_1$ may be modulated by the sending apparatus by using the modulation constellation diagram 1, the modulation symbols in $\Omega_2$ may be modulated by the sending apparatus by using the modulation constellation diagram 2, and the modulation symbols in $\Omega_3$ may be modulated by the sending apparatus by using the modulation constellation diagram 3. Modulation may also be referred to as mapping. This is not limited in this embodiment of this application. Indexes of the modulation symbols included in $\Omega_1$, $\Omega_2$, and $\Omega_3$ are respectively 0 to 23, 24 to 47, and 48 to 71.

If M=72 and X=2, each of the two sets may include 36 modulation symbols, and index values of the 36 modulation symbols are continuous. The two sets may be respectively $\Omega_1=\{d_0,d_1,d_2,...,d_{35}\}$ and $\Omega_2=\{d_{36},d_{37},d_{38},...,d_{71}\}$.

The two modulation constellation diagrams may be respectively a modulation constellation diagram 1 and a modulation constellation diagram 2. The modulation symbols in $\Omega_1$ may be modulated by the sending apparatus by using the modulation constellation diagram 1, and the modulation symbols in $\Omega_2$ may be modulated by the sending apparatus by using the modulation constellation diagram 2. Indexes of the modulation symbols included in $\Omega_1$ and $\Omega_2$ are respectively 0 to 35 and 36 to 71.

In another possible implementation, the M modulation symbols are unevenly allocated to the sets, and index values of modulation symbols in each set are continuous. To be specific, quantities of modulation symbols obtained based on any two modulation constellation diagrams in the different modulation constellation diagrams are different, and index values of modulation symbols obtained based on any modulation constellation diagram in the different modulation constellation diagrams are continuous.

If M=72 and X=3, quantities of modulation symbols in the three sets are different, and index values of the modulation symbols in each set are continuous. The three sets may be respectively $\Omega_1=\{d_0,d_1,d_2,...,d_{11}\}$, $\Omega_2=\{d_{12},d_{13},d_{14},...,d_{35}\}$, and $\Omega_3=\{d_{36},d_{37},d_{38},...,d_{71}\}$.

The three modulation constellation diagrams may be respectively a modulation constellation diagram 1, a modulation constellation diagram 2, and a modulation constellation diagram 3. The modulation symbols in $\Omega_1$ may be modulated by the sending apparatus by using the modulation constellation diagram 1, the modulation symbols in $\Omega_2$ may be modulated by the sending apparatus by using the modulation constellation diagram 2, and the modulation symbols in $\Omega_3$ may be modulated by the sending apparatus by using the modulation constellation diagram 3. Indexes of the modulation symbols included in $\Omega_1$, $\Omega_2$, and $\Omega_3$ are respectively 0 to 11, 12 to 35, and 36 to 71.

If M=72 and X=2, quantities of modulation symbols in the two sets are different, and index values of modulation symbols in each set are continuous. The two sets may be respectively $\Omega_1=\{d_0,d_1,d_2,...,d_{23}\}$ and $\Omega_2=\{d_{24},d_{25},d_{26},...,d_{71}\}$.

The two modulation constellation diagrams may be respectively a modulation constellation diagram 1 and a modulation constellation diagram 2. The modulation symbols in $\Omega_1$ may be modulated by the sending apparatus by using the modulation constellation diagram 1, and the modulation symbols in $\Omega_2$ may be modulated by the sending apparatus by using the modulation constellation diagram 2. Indexes of the modulation symbols included in $\Omega_1$ and $\Omega_2$ are respectively 0 to 23 and 24 to 71.

In still another possible implementation, the M modulation symbols are evenly allocated to the sets, and index values of modulation symbols in the sets and index values of the sets satisfy a formula $\mathrm{mod}(m, X) = i-1$, where the index values of the sets are the same as index values of modulation constellation diagrams. In other words, quantities of modulation symbols obtained based on the different modulation constellation diagrams are the same, and the index values of the modulation symbols obtained based on the different modulation constellation diagrams and the index values of the modulation constellation diagrams satisfy the formula $\mathrm{mod}(m, X) = i-1$.

If M=72 and X=3, each of the three sets may include 24 modulation symbols, and index values of the 24 modulation symbols and index values of the sets satisfy the formula $\mathrm{mod}(m, X) = i-1$. The three sets may be respectively $\Omega_1=\{d_0,d_3,d_6,...,d_{69}\}$, $\Omega_2=\{d_1,d_4,d_7,...,d_{70}\}$, and $\Omega_3=\{d_2,d_5,d_8,...,d_{71}\}$.

The three modulation constellation diagrams may be respectively a modulation constellation diagram 1, a modulation constellation diagram 2, and a modulation constellation diagram 3. The modulation symbols in $\Omega_1$ may be modulated by the sending apparatus by using the modulation constellation diagram 1, the modulation symbols in $\Omega_2$ may be modulated by the sending apparatus by using the modulation constellation diagram 2, and the modulation symbols in $\Omega_3$ may be modulated by the sending apparatus by using the modulation constellation diagram 3. Indexes of the modulation symbols included in $\Omega_1$ are 0, 3, 6, ..., and 69, that is, a difference between index values of adjacent modulation symbols is 3. Indexes of the modulation symbols included in $\Omega_2$ are 1, 4, 7, ..., and 70, that is, a difference between index values of adjacent modulation symbols is 3. Indexes of the modulation symbols included in $\Omega_3$ are 2, 5, 8, ..., and 71, that is, a difference between index values of adjacent modulation symbols is 3.

If M=72 and X=2, each of the two sets may include 36 modulation symbols, and index values of the 24 modulation symbols and index values of the sets satisfy the formula mod($m$, X) = $i$ -1. The two sets may be respectively $\Omega_1$= {$d_0,d_2,d_4,...,d_{70}$} and $\Omega_2$={$d_1,d_3,d_5,...,d_{71}$}.

The two modulation constellation diagrams may be respectively a modulation constellation diagram 1 and a modulation constellation diagram 2. The modulation symbols in $\Omega_1$ may be modulated by the sending apparatus by using the modulation constellation diagram 1, and the modulation symbols in $\Omega_2$ may be modulated by the sending apparatus by using the modulation constellation diagram 2. Indexes of the modulation symbols included in $\Omega_1$ are 0, 2, 4, ..., and 70, that is, a difference between index values of adjacent modulation symbols is 2. Indexes of the modulation symbols included in $\Omega_2$ are 1, 3, 5, ..., and 71, that is, a difference between index values of adjacent modulation symbols is 2.

The sending apparatus performs different processing on the M modulation symbols corresponding to the time domain unit, so that waveforms of the first signal can be different.

It should be noted that the sending apparatus performs same processing on modulation symbols corresponding to different time domain units. Herein, only M modulation symbols corresponding to any one of the time domain units are used for description.

In a possible implementation, if the sending apparatus performs IDFT processing after performing DFT on the M modulation symbols corresponding to the time domain unit, a waveform of the obtained first signal is DFT-s-ODFM.

The sending apparatus may perform, based on M subcarriers allocated for transmission, DFT processing on the M modulation symbols corresponding to the time domain unit, to obtain an output $y_k$ obtained through the DFT processing, where $k$={0,1,...,M-1}.

For example, $y_k$ may be represented by the following formula:

$$y_k = \frac{1}{\sqrt{M}} \sum_{m=0}^{M-1} d_m * e^{-j\frac{2\pi}{M}mk} ,$$

where

$d_m$ represents a modulation symbol whose index value is $m$ in the M modulation symbols, and $m$={0,1,...,M-1}.

It should be understood that at least two modulation symbols in an input of the DFT are modulated by using different modulation constellation diagrams, and an input length of the DFT is M.

If an input length N of the IDFT is equal to M, the sending apparatus directly performs IDFT processing on $y_k$. If the input length N of the IDFT is greater than M, the sending apparatus may first perform subcarrier mapping on $y_k$ whose length is M, to obtain $y_k'$ whose length is N, and then perform IDFT processing on $y_k'$.

The sending apparatus may perform a zero padding operation on $y_k$ whose length is M, to obtain $y_k'$ whose length is N. In this case, locations of zeros in $y_k'$ may be scattered or centralized. This is not limited in this embodiment of this application. In other words, locations of $y_k$ in $y_k'$ may be a part of continuous centralized locations, or may be distributed discrete locations.

The sending apparatus may perform IDFT processing on $y_k'$ whose length is N based on N subcarriers allocated for transmission, to obtain $s_n$, where $n$={0,1,...,N-1}. The sending apparatus may obtain the first signal based on $s_n$.

For example, $s_n$ may be represented by the following formula:

$$s_n = \frac{1}{\sqrt{N}} \sum_{n=0}^{N-1} y_k' * e^{j\frac{2\pi}{N}kn} .$$

In another possible implementation, if the sending apparatus performs IDFT processing on the M modulation symbols corresponding to the time domain unit, a waveform of the obtained first signal is an ODFM waveform.

If an input length N of the IDFT is equal to M, the sending apparatus directly performs IDFT processing on the M modulation symbols. If the input length N of the IDFT is greater than M, the sending apparatus may first perform subcarrier mapping on the modulation symbols whose length is M, to obtain modulation symbols whose length is N, and then perform IDFT processing on the modulation symbols whose length is N.

The sending apparatus may perform a zero padding operation on the modulation symbols whose length is M, to obtain the modulation symbols whose length is N. In this case, locations of zeros in the modulation symbols whose length is N may be scattered or centralized. This is not limited in this embodiment of this application. In other words, locations of the modulation symbols whose length is M in the modulation symbols whose length is N may be a part of continuous centralized locations, or may be distributed discrete locations.

The sending apparatus may perform IDFT processing on the modulation symbols whose length is N based on N subcarriers allocated for transmission, to obtain $s'_n$, where $n=\{0,1,...,N-1\}$. The sending apparatus may obtain the first signal based on $s'_n$.

For example, $s'_n$ may be represented by the following formula:

$$s'_n = \frac{1}{\sqrt{N}}\sum_{n=0}^{N-1} d_n * e^{j\frac{2\pi}{N}kn},$$

where
$d_n$ represents a modulation symbol whose index value is $n$ in the N modulation symbols, and $n=\{0,1,...,N-1\}$.

In the foregoing example, at least two modulation symbols in the M modulation symbols are obtained by modulating a bit sequence based on different modulation constellation diagrams. The bit sequence may include bits in one bit sequence, or may include bits in a plurality of bit sequences. This is not limited in this embodiment of this application.

If the bit sequence includes bits in a plurality of bit sequences, the sending apparatus may modulate bits in a same bit sequence based on a same modulation constellation diagram. The plurality of bit sequences may be sent by the sending apparatus to a same receiving apparatus, or may be sent by the sending apparatus to different receiving apparatuses. This is not limited in this embodiment of this application.

For example, the bit sequence includes two bit sequences, and the two bit sequences are respectively bits in a bit sequence 1 and a bit sequence 2. The sending apparatus may modulate the bits in the bit sequence 1 based on a modulation constellation diagram 1, and modulate the bits in the bit sequence 2 based on a modulation constellation diagram 2. If the two bit sequences are sent to a same receiving apparatus, the first signal may include information about the bit sequence 1 and the bit sequence 2. If the two bit sequences are sent to different receiving apparatuses, the first signal may include information about the bit sequence 1 or the bit sequence 2.

**In a second possible case,** the at least two modulation symbols obtained through modulation based on the different modulation constellation diagrams in the plurality of modulation symbols correspond to different time domain units.

At least two modulation symbols in the plurality of modulation symbols are obtained through modulation based on the different modulation constellation diagrams, and the at least two modulation symbols correspond to different time domain units. In other words, the at least two modulation symbols obtained based on the different modulation constellation diagrams correspond to different time domain units, and modulation symbols corresponding to a same time domain unit are obtained based on a same modulation constellation diagram. In other words, modulation symbols corresponding to at least two time domain units in different time domain units are obtained through modulation based on the different modulation constellation diagrams.

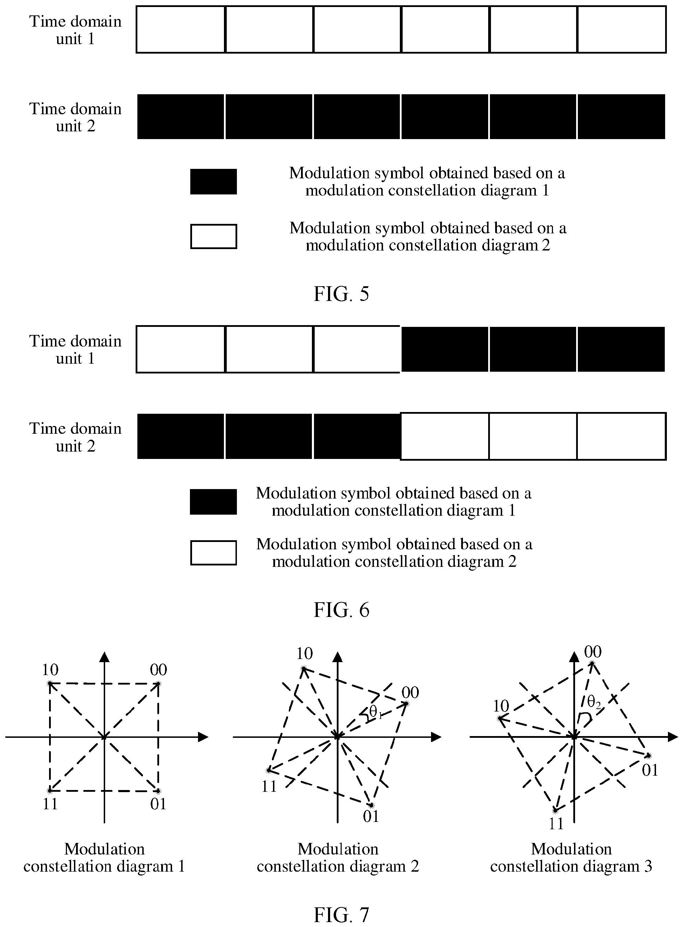

For example, FIG. 5 is a diagram of modulation symbols corresponding to different time domain units. As shown in FIG. 5, there are two time domain units, each time domain unit corresponds to six modulation symbols, there are two different modulation constellation diagrams, and the two modulation constellation diagrams are a modulation constellation diagram 1 and a modulation constellation diagram 2. In the figure, modulation symbols filled with black are obtained based on the modulation constellation diagram 1, modulation symbols filled with white are obtained based on a modulation constellation diagram 2, a modulation symbol obtained based on the modulation constellation diagram 1 corresponds to a time domain unit 2, and a modulation symbol obtained based on the modulation constellation diagram 2 corresponds to a time domain unit 1. In other words, modulation symbols obtained based on different modulation constellation diagrams correspond to different time domain units.

Optionally, quantities of time domain units corresponding to modulation symbols obtained based on different modulation constellation diagrams are the same or different.

Quantities of time domain units corresponding to modulation symbols obtained by the sending apparatus based on different modulation constellation diagrams may be the same or may be different. This is not limited in this embodiment of this application.

For example, there may be two different modulation constellation diagrams, and the two modulation constellation diagrams are respectively a modulation constellation diagram 1 and a modulation constellation diagram 2. A quantity of time domain units corresponding to modulation symbols obtained based on the modulation constellation diagram 1 is the same as or different from a quantity of time domain units corresponding to modulation symbols obtained based on the modulation constellation diagram 1.

Optionally, the different modulation constellation diagrams include a first modulation constellation diagram, and index values of time domain units corresponding to modulation symbols obtained based on the first modulation constellation diagram are continuous or discontinuous.

Index values of time domain units may be used to distinguish between different time domain units, and the index values of the time domain units may be integers greater than or equal to 0.

The first modulation constellation diagram may be any one of the different modulation constellation diagrams, and the index values of the time domain units corresponding to the modulation symbols obtained based on the first modulation constellation diagram may be continuous or discontinuous. This is not limited in this embodiment of this application.

If the index values of the time domain units corresponding to the modulation symbols obtained based on the first modulation constellation diagram are continuous, a quantity of time domain units corresponding to the modulation symbols obtained based on the first modulation constellation diagram may be the same as or different from a quantity of time domain units corresponding to modulation symbols obtained based on any other modulation constellation diagram.

If the index values of the time domain units corresponding to the modulation symbols obtained based on the first modulation constellation diagram are continuous, index values of the time domain units corresponding to the modulation symbols obtained based on the any other modulation constellation diagram may be continuous or discontinuous. This is not limited in this embodiment of this application.

Optionally, when the index values of the modulation symbols obtained based on the different modulation constellation diagrams are discontinuous, the index values i of the different modulation constellation diagrams and the index values $l$ of the different time domain units satisfy the following formula:

$$\mathrm{mod}(l, \mathrm{X}) = i - 1,$$

where

$l$ is the index values of the different time domain units, X is a quantity of the different modulation constellation diagrams, X is an integer greater than or equal to 2, mod() is a modulo operation, $i$ is the index values of the different modulation constellation diagrams, and $i=\{1,...,X\}$.

For example, if a quantity of different time domain units is L, and L is an integer greater than or equal to 2, the L time domain units may be respectively $L_0, L_1, L_2,...,L_{L-1}$. If one time domain unit corresponds to M modulation symbols, a quantity of plurality of symbols may be L*M. $d_{l*M+m}$ may be used to represent an $m^{th}$ modulation symbol corresponding to an $l^{th}$ time domain unit, where $l=\{0,...,L-1\}$, and $m=\{0,1,...,M-1\}$.

Modulation symbols corresponding to different time domain units are obtained based on different modulation constellation diagrams. Time domain units corresponding to modulation symbols obtained based on a same modulation constellation diagram may form a set. A quantity of sets is the same as a quantity of different modulation constellation diagrams. If the quantity of different modulation constellation diagrams is X, the quantity of sets is X, and the X sets may be respectively $\Omega_1, \Omega_2,...,\Omega_X$, where each set is a non-empty set, $\Omega_a \cap \Omega_b = \emptyset$, and $\Omega_1 \cup \Omega_2 \cup ... \cup \Omega_X = \{L_0, L_1, L_2,...,L_{L-1}\}$. $a \neq b$, $1 \leq a \leq X$, and $1 \leq b \leq X$.

In a possible implementation, the L time domain units are evenly allocated to the sets, and index values of time domain units in each set are continuous. To be specific, quantities of time domain units corresponding to modulation symbols obtained based on the different modulation constellation diagrams are the same, and index values of time domain units corresponding to modulation symbols obtained based on the different modulation constellation diagrams are continuous.

If L=30 and X=3, each of the three sets may include 10 time domain units, and index values of the 10 time domain units are continuous. The three sets may be respectively $\Omega_1 = \{L_0, L_1, L_2,...,L_9\}$, $\Omega_2 = \{L_{10}, L_{11}, L_{12},...,L_{19}\}$, and $\Omega_3 = \{L_{20}, L_{21}, L_{22},...,L_{29}\}$.

The three modulation constellation diagrams may be respectively a modulation constellation diagram 1, a modulation constellation diagram 2, and a modulation constellation diagram 3. Modulation symbols $d_{l*M+m}$, $l=\{0,1,2,...,9\}$, $m=\{0,1,...M-1\}$ corresponding to the time domain units in $\Omega_1$ may be modulated by the sending apparatus by using the modulation constellation diagram 1, modulation symbols $d_{l*M+m}$, $l=\{10,11,12,...,19\}$, $m=\{0,1,...,M-1\}$ corresponding to the time domain units in $\Omega_2$ may be modulated by the sending apparatus by using the modulation constellation diagram 2, and modulation symbols $d_{l*M+m}$, $l=\{20,21,22,...,29\}$, $m=\{0,1,...,M-1\}$ corresponding to the time domain units in $\Omega_3$ may be modulated by the sending apparatus by using the modulation constellation diagram 3. Modulation may also be referred to as mapping. This is not limited in this embodiment of this application.

If L=30 and X=2, each of the two sets may include 15 time domain units, and index values of the 15 time domain units are continuous. The two sets may be respectively $\Omega_1=\{L_0,L_1,L_2,...,L_{14}\}$ and $\Omega_2=\{L_{15},L_{16},L_{17},...,L_{29}\}$.

The two modulation constellation diagrams may be respectively a modulation constellation diagram 1 and a modulation constellation diagram 2. Modulation symbols $d_{l*M+m}$, $l=\{0,1,2,...,14\}$, $m=\{0,1,...,M-1\}$ corresponding to the time domain units in $\Omega_1$ may be modulated by the sending apparatus by using the modulation constellation diagram 1, and modulation symbols $d_{l*M+m}$, $l=\{15,16,17,...,29\}$, $m=\{0,1,...,M-1\}$ corresponding to the time domain units in $\Omega_2$ may be modulated by the sending apparatus by using the modulation constellation diagram 2.

In another possible implementation, the L time domain units are unevenly allocated to the sets, and index values of time domain units in each set are continuous. To be specific, quantities of time domain units corresponding to modulation symbols obtained based on any two modulation constellation diagrams in the different modulation constellation diagrams are different, and index values of time domain units corresponding to modulation symbols obtained based on any modulation constellation diagram in the different modulation constellation diagrams are continuous.

If L=30 and X=3, quantities of time domain units corresponding to modulation symbols in the three sets are different, and index values of time domain units in each set are continuous. The three sets may be respectively $\Omega_1=\{L_0,L_1,L_2,...,L_4\}$, $\Omega_2=\{L_5,L_6,L_7,...,L_{14}\}$, and $\Omega_3=\{L_{15},L_{16},L_{17},...,L_{29}\}$.

The three modulation constellation diagrams may be respectively a modulation constellation diagram 1, a modulation constellation diagram 2, and a modulation constellation diagram 3. Modulation symbols $d_{l*M+m}$, $l=\{0,1,2,...,4\}$, $m=\{0,1,...,M-1\}$ corresponding to time domain units in $\Omega_1$ may be modulated by the sending apparatus by using the modulation constellation diagram 1, modulation symbols $d_{l*M+m}$, $l=\{5,6,7,...,14\}$, $m=\{0,1,...,M-1\}$ corresponding to time domain units in $\Omega_2$ may be modulated by the sending apparatus by using the modulation constellation diagram 2, and modulation symbols $d_{l*M+m}$, $l=\{15,16,17,...,29\}$, $m=\{0,1,...,M-1\}$ corresponding to time domain units in $\Omega_3$ may be modulated by the sending apparatus by using the modulation constellation diagram 3.

If L=30 and X=2, quantities of time domain units in the two sets are different, and index values of time domain units in each set are continuous. The two sets may be respectively $\Omega_1=\{L_0,L_1,L_2,...,L_9\}$ and $\Omega_2=\{L_{10},L_{11},L_{12},...,L_{29}\}$.

The two modulation constellation diagrams may be respectively a modulation constellation diagram 1 and a modulation constellation diagram 2. Modulation symbols $d_{l*M+m}$, $l=\{0,1,2,...,9\}$, $m=\{0,1,...,M-1\}$ corresponding to time domain units in $\Omega_1$ may be modulated by the sending apparatus by using the modulation constellation diagram 1, and modulation symbols $d_{l*M+m}$, $l=\{10,11,12,...,29\}$, $m=\{0,1,...,M-1\}$ corresponding to time domain units in $\Omega_2$ may be modulated by the sending apparatus by using the modulation constellation diagram 2.

In still another possible implementation, the L time domain units are evenly allocated to the sets, and index values of time domain units in the sets and index values of the sets satisfy a formula $mod(l, X) = i -1$, where the index values of the sets are the same as index values of modulation constellation diagrams. In other words, quantities of time domain units corresponding to modulation symbols obtained based on the different modulation constellation diagrams are the same, and the index values of the time domain units corresponding to the modulation symbols obtained based on the different modulation constellation diagrams and the index values of the modulation constellation diagrams satisfy the formula $mod(l, X) = i -1$.

If L=30 and X=3, each of the three sets may include 10 time domain units, and index values of the 10 time domain units and index values of the sets satisfy the formula $mod(l, X) = i -1$. The three sets may be respectively $\Omega_1$, $\Omega_2=\{L_1,L_4,L_7,...,L_{28}\}$, and $\Omega_3=\{L_2,L_5,L_8,...,L_{29}\}$.

The three modulation constellation diagrams may be respectively a modulation constellation diagram 1, a modulation constellation diagram 2, and a modulation constellation diagram 3. Modulation symbols $d_{l*M+m}$, $l=\{0,3,6,...,27\}$, $m=\{0,1,...,M-1\}$ corresponding to the time domain units in $\Omega_1$ may be modulated by the sending apparatus by using the modulation constellation diagram 1, modulation symbols $d_{l*M+m}$, $l=\{1,4,7,...,28\}$, $m=\{0,1,...M-1\}$ corresponding to the time domain units in $\Omega_2$ may be modulated by the sending apparatus by using the modulation constellation diagram 2, and modulation symbols $d_{l*M+m}$, $l=\{2,5,8,...,29\}$, $m=\{0,1,...,M-1\}$ corresponding to the time domain units in $\Omega_3$ may be modulated by the sending apparatus by using the modulation constellation diagram 3.

If L=30 and X=2, each of the two sets may include 15 time domain units, and index values of the 15 time domain units and index values of the sets satisfy the formula $mod(l, X) = i -1$. The two sets may be respectively $\Omega_1$ and $\Omega_2=\{L_1,L_3,L_5,...,L_{29}\}$.

The two modulation constellation diagrams may be respectively a modulation constellation diagram 1 and a modulation constellation diagram 2. Modulation symbols $d_{l*M+m}$, $l=\{0,2,4,...,28\}$, $m=\{0,1,...,M-1\}$ corresponding to the time domain units in $\Omega_1$ may be modulated by the sending apparatus by using the modulation constellation diagram 1, and modulation symbols $d_{l*M+m}$, $l=\{1,3,5,...29\}$, $m=\{0,1,...,M-1\}$ corresponding to the time domain units in $\Omega_2$ may be modulated by the sending apparatus by using the modulation constellation diagram 2.

The sending apparatus performs different processing on the modulation symbols corresponding to the L time domain units, so that waveforms of the first signal can be different.

In a possible implementation, if the sending apparatus performs IDFT processing after performing DFT on the modulation symbols corresponding to the L time domain units, a waveform of the obtained first signal is DFT-s-ODFM.

In an $l^{th}$ time domain unit in the L time domain units, the sending apparatus may perform, based on M subcarriers allocated for transmission, DFT processing on modulation symbols corresponding to the $l^{th}$ time domain unit, to obtain an output $y_{l*M+k}$ obtained through the DFT processing, where $k=\{0,1,...,M-1\}$.

For example, $y_{l*M+k}$ may be represented by the following formula:

$$y_{l*M+k} = \frac{1}{\sqrt{M}} \sum_{m=0}^{M-1} d_{l*M+m} * e^{-j\frac{2\pi}{M}mk}$$

, where

$d_{l*M+m}$ represents a modulation symbol whose index value is $m$ in the modulation symbols corresponding to the $l^{th}$ time domain unit, and $m=\{0,1,...,M-1\}$.

An input length of the DFT is equal to a quantity of modulation symbols corresponding to a time domain unit, that is, the length is M. If an input length N of the IDFT is equal to M, the sending apparatus directly performs IDFT processing on $y_{l*M+k}$. If the input length N of the IDFT is greater than M, the sending apparatus may first perform subcarrier mapping on $y_{l*M+k}$ whose length is M, to obtain $y'_{l*M+k}$ whose length is N, and then perform IDFT processing on $y'_{l*M+k}$.

The sending apparatus may perform a zero padding operation on $y_{l*M+k}$ whose length is M, to obtain $y'_{l*M+k}$ whose length is N. In this case, locations of zeros in $y'_{l*M+k}$ may be scattered or centralized. This is not limited in this embodiment of this application. In other words, locations of $y_{l*M+k}$ in $y'_{l*M+k}$ may be a part of continuous centralized locations, or may be distributed discrete locations.

The sending apparatus may perform IDFT processing on $y'_{l*M+k}$ whose length is N based on N subcarriers allocated for transmission, to obtain $s_n$, where $n=\{0,1,...,N-1\}$. The sending apparatus may obtain the first signal based on $s_n$.

For example, $s_n$ may be represented by the following formula:

$$s_n = \frac{1}{\sqrt{N}} \sum_{n=0}^{N-1} y'_{l*M+n} * e^{j\frac{2\pi}{N}kn}$$

.

In another possible implementation, if the sending apparatus performs IDFT processing on the modulation symbols corresponding to the L time domain units, a waveform of the obtained first signal is an ODFM waveform.

In an $l^{th}$ time domain unit in the L time domain units, if an input length N of the IDFT is equal to M, the sending apparatus directly performs IDFT processing on the modulation symbols $d_{l*M+m}$. If the input length N of the IDFT is greater than M, the sending apparatus may first perform subcarrier mapping on the modulation symbols $d_{l*M+m}$ whose length is M, to obtain modulation symbols $d_{l*M+n}$ whose length is N, and then perform IDFT processing on the modulation symbols $d_{l*M+n}$ whose length is N.

The sending apparatus may perform a zero padding operation on the modulation symbols $d_{l*M+m}$ whose length is M, to obtain the modulation symbols $d_{l*M+n}$ whose length is N. In this case, locations of zeros in the modulation symbols $d_{l*M+n}$ whose length is N may be scattered or centralized. This is not limited in this embodiment of this application. In other words, locations of the modulation symbols $d_{l*M+m}$ whose length is M in the modulation symbols $d_{l*M+n}$ whose length is N may be a part of continuous centralized locations, or may be distributed discrete locations.

The sending apparatus may perform IDFT processing on the modulation symbols $d_{l*M+n}$ whose length is N based on N subcarriers allocated for transmission, to obtain $s'_n$, where $n=\{0,1,...,N-1\}$. The sending apparatus may obtain the first signal based on $s'_n$.

For example, $s'_n$ may be represented by the following formula:

$$s'_n = \frac{1}{\sqrt{N}} \sum_{n=0}^{N-1} d_{l*M+n} * e^{j\frac{2\pi}{N}kn}$$

.

, where

$d_{l*M+n}$ represents a modulation symbol whose index value is $n$ in the N modulation symbols, and $n=\{0,1,...,N-1\}$.

In the foregoing example, at least two time domain units in the L time domain units are obtained by modulating a bit sequence based on different modulation constellation diagrams. The bit sequence may include bits in one bit sequence, or may include bits in a plurality of bit sequences. This is not limited in this embodiment of this application.

Each of the L time domain units corresponds to at least two modulation symbols. The following describes in detail a case in which each of the L time domain units corresponds to one modulation symbol.

If a quantity of different time domain units is L, and L is an integer greater than or equal to 2, the L time domain units may be respectively $L_0,L_1,L_2,...,L_{L-1}$. If one time domain unit corresponds to M modulation symbols, a quantity of plurality of symbols may be L. $d_l$ may be used to represent a modulation symbol corresponding to an $l^{th}$ time domain unit, where $l=\{0,...,L-1\}$.

Modulation symbols corresponding to different time domain units are obtained based on different modulation constellation diagrams. Time domain units corresponding to modulation symbols obtained based on a same modulation constellation diagram may form a set. A quantity of sets is the same as a quantity of different modulation constellation diagrams. If the quantity of different modulation constellation diagrams is X, the quantity of sets is X, and the X sets may be respectively $\Omega_1,\Omega_2,...,\Omega_X$, where each set is a non-empty set, $\Omega_a \cap \Omega_b=\varnothing$, and $\Omega_1\Omega_2\cup...\cup\Omega_X=\{L_0,L_1,L_2,...,L_{L-1}\}$. $a\neq b$, $1\leq a\leq X$, and $1\leq b\leq X$.

In a possible implementation, the L time domain units are evenly allocated to the sets, and index values of time domain units in each set are continuous. To be specific, quantities of time domain units corresponding to modulation symbols obtained based on the different modulation constellation diagrams are the same, and index values of time domain units corresponding to modulation symbols obtained based on the different modulation constellation diagrams are continuous.

If L=30 and X=3, each of the three sets may include 10 time domain units, and index values of the 10 time domain units are continuous. The three sets may be respectively $\Omega_1=\{L_0,L_1,L_2,...,L_9\}$, $\Omega_2=\{L_{10},L_{11},L_{12},...,L_{19}\}$, and $\Omega_3=\{L_{20},L_{21},L_{22},...,L_{29}\}$.

The three modulation constellation diagrams may be respectively a modulation constellation diagram 1, a modulation constellation diagram 2, and a modulation constellation diagram 3. Modulation symbols $D_1=\{d_0,d_1,d_2,...,d_9\}$ corresponding to the time domain units in $\Omega_1$ may be modulated by the sending apparatus by using the modulation constellation diagram 1, modulation symbols $D_2=\{d_{10},d_{11},d_{12},...,d_{19}\}$ corresponding to the time domain units in $\Omega_2$ may be modulated by the sending apparatus by using the modulation constellation diagram 2, and modulation symbols $D_2=\{d_{20},d_{21},d_{22},...,d_{29}\}$ corresponding to the time domain units in $\Omega_3$ may be modulated by the sending apparatus by using the modulation constellation diagram 3. Modulation may also be referred to as mapping. This is not limited in this embodiment of this application.

If L=30 and X=2, each of the two sets may include 15 time domain units, and index values of the 15 time domain units are continuous. The two sets may be respectively $\Omega_1=\{L_0,L_1,L_2,...,L_{14}\}$ and $\Omega_2=\{L_{15},L_{16},L_{17},...,L_{29}\}$.

The two modulation constellation diagrams may be respectively a modulation constellation diagram 1 and a modulation constellation diagram 2. Modulation symbols $D_1=\{d_0,d_1,d_2,...,d_{14}\}$ corresponding to the time domain units in $\Omega_1$ may be modulated by the sending apparatus by using the modulation constellation diagram 1, and modulation symbols $d_1=\{d_{15},d_{16},d_{17},...,d_{29}\}$ corresponding to the time domain units in $\Omega_2$ may be modulated by the sending apparatus by using the modulation constellation diagram 2.

In another possible implementation, the L time domain units are unevenly allocated to the sets, and index values of time domain units in each set are continuous. To be specific, quantities of time domain units corresponding to modulation symbols obtained based on the different modulation constellation diagrams are different, and index values of time domain units corresponding to modulation symbols obtained based on the different modulation constellation diagrams are continuous.

If L=30 and X=3, quantities of time domain units corresponding to modulation symbols in the three sets are different, and index values of time domain units in each set are continuous. The three sets may be respectively $\Omega_1=\{L_0,L_1,L_2,...,L_4\}$, $\Omega_2=\{L_5,L_6,L_7,...,L_{14}\}$, and $\Omega_3=\{L_{15},L_{16},L_{17},...,L_{29}\}$.

The three modulation constellation diagrams may be respectively a modulation constellation diagram 1, a modulation constellation diagram 2, and a modulation constellation diagram 3. Modulation symbols $D_1=\{d_0,d_1,d_2,...,d_4\}$ corresponding to time domain units in $\Omega_1$ may be modulated by the sending apparatus by using the modulation constellation diagram 1, modulation symbols $D_1=\{d_5,d_6,d_6,...,d_{14}\}$ corresponding to time domain units in $\Omega_2$ may be modulated by the sending apparatus by using the modulation constellation diagram 2, and modulation symbols $D_3=\{d_{15},d_{16},d_{17},...,d_{29}\}$ corresponding to time domain units in $\Omega_3$ may be modulated by the sending apparatus by using the modulation constellation diagram 3.

If L=30 and X=2, quantities of time domain units in the two sets are different, and index values of time domain units in each set are continuous. The two sets may be respectively $\Omega_1=\{L_0,L_1,L_2,...,L_9\}$ and $\Omega_2=\{L_{10},L_{11},L_{12},...,L_{29}\}$.

The two modulation constellation diagrams may be respectively a modulation constellation diagram 1 and a modulation constellation diagram 2. Modulation symbols $D_1=\{d_0,d_1,d_2,...,d_9\}$ corresponding to time domain units in $\Omega_1$ may be modulated by the sending apparatus by using the modulation constellation diagram 1, and modulation symbols $D_1=\{d_{10},d_{11},d_{12},...,d_{29}\}$ corresponding to time domain units in $\Omega_2$ may be modulated by the sending apparatus by using the modulation constellation diagram 2.

In still another possible implementation, the L time domain units are evenly allocated to the sets, and index values of time domain units in the sets and index values of the sets satisfy a formula mod($l$, X) = $i$ -1, where the index values of the sets are the same as index values of modulation constellation diagrams. In other words, quantities of time domain units corresponding to modulation symbols obtained based on the different modulation constellation diagrams are the same, and the index values of the time domain units corresponding to the modulation symbols obtained based on the different modulation constellation diagrams and the index values of the modulation constellation diagrams satisfy the formula mod($l$, X) = $i$ -1.

If L=30 and X=3, each of the three sets may include 10 time domain units, and index values of the 10 time domain units and index values of the sets satisfy the formula mod($l$, X) = $i$ -1. The three sets may be respectively $\Omega_1$ , $\Omega_2=\{L_1,L_4,L_7,...,L_{28}\}$ , and $\Omega_3=\{L_2,L_5,L_8,...,L_{29}\}$.

The three modulation constellation diagrams may be respectively a modulation constellation diagram 1, a modulation constellation diagram 2, and a modulation constellation diagram 3. Modulation symbols $D_1=\{d_0,d_3,d_6,...,d_{27}\}$ corresponding to the time domain units in $\Omega_1$ may be modulated by the sending apparatus by using the modulation constellation diagram 1, modulation symbols $D_1=\{d_1,d_4,d_7,...,d_{28}\}$ corresponding to the time domain units in $\Omega_2$ may be modulated by the sending apparatus by using the modulation constellation diagram 2, and modulation symbols $D_3=\{d_2,d_5,d_8,...,d_{29}\}$ corresponding to the time domain units in $\Omega_3$ may be modulated by the sending apparatus by using the modulation constellation diagram 3.

If L=30 and X=2, each of the two sets may include 15 time domain units, and index values of the 15 time domain units and index values of the sets satisfy the formula mod($l$, X) = $i$ -1. The two sets may be respectively $\Omega_1$ and $\Omega_2=\{L_1,L_3,L_5,...,L_{29}\}$.

The two modulation constellation diagrams may be respectively a modulation constellation diagram 1 and a modulation constellation diagram 2. Modulation symbols $D_1=\{d_0,d_2,d_4,...,d_{28}\}$ corresponding to the time domain units in $\Omega_1$ may be modulated by the sending apparatus by using the modulation constellation diagram 1, and modulation symbols $D_2=\{d_0,d_3,d_5,...,d_{29}\}$ corresponding to the time domain units in $\Omega_2$ may be modulated by the sending apparatus by using the modulation constellation diagram 2.

The sending apparatus performs quadrature amplitude modulation processing on the modulation symbols corresponding to the L time domain units, so that a waveform of the first signal may be an SC-QAM waveform.

**In a third possible case,** at least two modulation symbols in modulation symbols corresponding to different time domain units are obtained through modulation based on the different modulation constellation diagrams, and at least two modulation symbols in modulation symbols corresponding to a same time domain unit are obtained through modulation based on the different modulation constellation diagrams.

In modulation symbols obtained based on the different modulation constellation diagrams, at least two modulation symbols correspond to different time domain units, and at least two modulation symbols correspond to a same time domain unit. In other words, modulation symbols corresponding to a same time domain unit are obtained based on the different modulation constellation diagrams, and modulation symbols corresponding to at least two time domain units in different time domain units are obtained based on the different modulation constellation diagrams. In other words, in the plurality of modulation symbols corresponding to the plurality of time domain units, modulation symbols corresponding to one time domain unit are obtained based on different modulation constellations, and modulation symbols corresponding to at least two different time domain units in the plurality of time domain units are obtained based on different modulation constellation diagrams. It may be understood that there may be two or more time domain units. This is not limited in this application.

For example, FIG. 6 is a diagram of modulation symbols corresponding to different time domain units and a same time domain unit. As shown in FIG. 6, there are two time domain units, each time domain unit corresponds to six modulation symbols, there are two different modulation constellation diagrams, and the two modulation constellation diagrams are a modulation constellation diagram 1 and a modulation constellation diagram 2. In the figure, modulation symbols filled with black are obtained based on the modulation constellation diagram 1, modulation symbols filled with white are obtained based on the modulation constellation diagram 2, modulation symbols obtained based on different modulation constellation diagrams exist in a same time domain unit, and modulation symbols obtained based on different modulation constellation diagrams exist between different time domain units.

Optionally, quantities of modulation symbols obtained based on different modulation constellation diagrams are the same or different.

When the sending apparatus performs modulation based on different modulation constellation diagrams, quantities of modulation symbols obtained based on the different modulation constellation diagrams may be the same, or quantities of modulation symbols obtained based on the different modulation constellation diagrams may be different.

This is not limited in this embodiment of this application.

For example, a quantity of a plurality of modulation symbols is 10, a quantity of modulation constellation diagrams is 2, and the modulation constellation diagrams are respectively a modulation constellation diagram 1 and a modulation constellation diagram 2. In a possible implementation, a quantity of modulation symbols obtained based on the modulation constellation diagram 1 may be the same as a quantity of modulation symbols obtained based on the modulation constellation diagram 2, that is, 5. In the five modulation symbols, at least two modulation symbols correspond to different time domain units, and at least two modulation symbols correspond to a same time domain unit.

In another possible implementation, a quantity of modulation symbols obtained based on the modulation constellation diagram 1 may be different from a quantity of modulation symbols obtained based on the modulation constellation diagram 2. For example, the quantity of modulation symbols obtained based on the modulation constellation diagram 1 may be 3, and a quantity of modulation symbols obtained based on the modulation constellation diagram 2 may be 7. In the three modulation symbols obtained based on the modulation constellation diagram 1, two modulation symbols may correspond to different time domain units, one time domain unit corresponds to one modulation symbol obtained based on the modulation constellation diagram 1, and one time domain unit corresponds to two modulation symbols obtained based on the modulation constellation diagram 1. In the seven modulation symbols obtained based on the modulation constellation diagram 2, at least two modulation symbols may correspond to different time domain units, and at least two modulation symbols correspond to a same time domain unit.

Optionally, the different modulation constellation diagrams include a first modulation constellation diagram, modulation symbols obtained based on the first modulation constellation diagram include modulation symbols corresponding to different time domain units, and index values of such different time domain units are continuous or discontinuous. The modulation symbols obtained based on the first modulation constellation diagram also include modulation symbols corresponding to a same time domain unit, and index values of such modulation symbols are continuous or discontinuous.

If the index values of the modulation symbols that correspond to the same time domain unit and that are obtained based on the first modulation constellation diagram are continuous, a quantity of modulation symbols that correspond to the same time domain unit and that are obtained based on the first modulation constellation diagram may be the same as or different from a quantity of modulation symbols that correspond to the time domain unit and that are obtained based on another modulation constellation diagram.

If the index values of the modulation symbols that correspond to the same time domain unit and that are obtained based on the first modulation constellation diagram are discontinuous, the quantity of modulation symbols that correspond to the same time domain unit and that are obtained based on the first modulation constellation diagram may be the same as or different from the quantity of modulation symbols that correspond to the time domain unit and that are obtained based on the another modulation constellation diagram.

If the index values of the modulation symbols that correspond to the same time domain unit and that are obtained based on the first modulation constellation diagram are continuous, index values of the modulation symbols that correspond to the same time domain unit and that are obtained based on the another modulation constellation diagram may be continuous or discontinuous. This is not limited in this embodiment of this application.

If the index values of the different time domain units corresponding to the modulation symbols obtained based on the first modulation constellation diagram are continuous, a quantity of different time domain units corresponding to the modulation symbols obtained based on the first modulation constellation diagram may be the same as or different from a quantity of different time domain units corresponding to modulation symbols obtained based on another modulation constellation diagram.

If the index values of the different time domain units corresponding to the modulation symbols obtained based on the first modulation constellation diagram are discontinuous, the quantity of different time domain units corresponding to the modulation symbols obtained based on the first modulation constellation diagram may be the same as or different from the quantity of different time domain units corresponding to the modulation symbols obtained based on the another modulation constellation diagram.

If the index values of the different time domain units corresponding to the modulation symbols obtained based on the first modulation constellation diagram are continuous, index values of the different time domain units corresponding to the modulation symbols obtained based on the another modulation constellation diagram may be continuous or discontinuous. This is not limited in this embodiment of this application.

Optionally, when index values of modulation symbols that correspond to a same time domain unit and that are obtained based on different modulation constellation diagrams are discontinuous, in the same time domain unit, a correspondence between index values of the different modulation constellation diagrams and index values of the modulation symbols obtained based on the different modulation constellation diagrams may satisfy the following formula:

$$\mathrm{mod}(m, \mathrm{X}) = i - 1,$$

where

$m$ is the index values of the plurality of modulation symbols, X is a quantity of the different modulation constellation diagrams, X is an integer greater than or equal to 2, mod() is a modulo operation, $i$ is the index values of the different modulation constellation diagrams, and $i=\{1,...,X\}$.

When index values of different time domain units corresponding to modulation symbols obtained based on different modulation constellation diagrams are discontinuous, index values of the different modulation constellation diagrams and index values of the different time domain units satisfy the following formula:

$$\mathrm{mod}(l, \mathrm{X}) = i - 1,$$

, where

$l$ is the index values of the different time domain units, X is a quantity of the different modulation constellation diagrams, X is an integer greater than or equal to 2, mod() is a modulo operation, $i$ is the index values of the different modulation constellation diagrams, and $i=\{1,...,X\}$.

For example, if a quantity of different time domain units is L, and L is an integer greater than or equal to 2, the L time domain units may be respectively $L_0, L_1, L_2,..., L_{L-1}$. If one time domain unit corresponds to M modulation symbols, and M is an integer greater than or equal to 2, the M modulation symbols may be respectively $d_0, d_1, d_2,..., d_{M-1}$. In this case, a quantity of plurality of symbols may be L*M. $d_{l*M+m}$ may be used to represent an $m^{th}$ modulation symbol corresponding to an $l^{th}$ time domain unit, where $l=\{0,...,L-1\}$, and $m=\{0,1,...,M-1\}$.

The L*M modulation symbols are obtained based on different modulation constellation diagrams. Modulation symbols obtained based on a same modulation constellation diagram may form a set. A quantity of sets is the same as a quantity of different modulation constellation diagrams. If the quantity of different modulation constellation diagrams is X, the quantity of sets is X, and the X sets may be respectively $\Omega_1, \Omega_2,..., \Omega_X$, where each set is a non-empty set, $\Omega_a \cap \Omega_b = \varnothing$, and $\Omega_1 \cup \Omega_2 \cup ... \cup \Omega_X = \{d_0, d_1, d_2,..., d_{L*(M-1)}\}$. $a \neq b$, $1 \leq a \leq X$, and $1 \leq b \leq X$.

In a possible implementation, the L*M modulation symbols are evenly allocated to the sets. In each set, index values of modulation symbols that correspond to a same time domain unit and that are obtained based on different modulation constellation diagrams are continuous (in other words, in the modulation symbols corresponding to the same time domain unit, index values of modulation symbols obtained based on different modulation constellation diagrams are continuous), and index values of different time domain units corresponding to modulation symbols obtained based on a same modulation constellation diagram are continuous. In addition, in modulation symbols corresponding to a same time domain unit, quantities of modulation symbols obtained based on different modulation constellation diagrams are the same, and quantities of time domain units corresponding to modulation symbols obtained based on any two modulation constellation diagrams in the different modulation constellation diagrams are the same.

If L=30, X=3, and M=72, in each of the three sets, index values of different time domain units corresponding to modulation symbols obtained based on a same modulation constellation diagram are continuous, and in a same time domain unit, index values of modulation symbols obtained based on different modulation constellation diagrams are continuous. The three sets may be respectively: $\Omega_1 = \{d_{l*M+m}\}$, where when $l=\{0,1,2,...,9\}$, $m=\{0,1,2,...,23\}$; when $l=\{10,11,12,..., 19\}$, $m=\{24,25,26,...,47\}$; and when $l=\{20,21,22,...,29\}$, $m=\{48,49,50,...,71\}$; $\Omega_2 = \{d_{l*M+m}\}$, where when $l=\{0,1,2,...,9\}$, $m=\{24,25,26,...,47\}$; when $l=\{10,11,12,...,19\}$, $m=\{48,49,50,...,71\}$; and when $l=\{20,21,22,...,29\}$, $m=\{0,1,2,...,23\}$; and $\Omega_3 = \{d_{l*M+m}\}$, where when $l=\{0,1,2,...,9\}$, $m=\{48,49,50,...,71\}$; when $l=\{10,11,12,...,19\}$, $m=\{0,1,2,...,23\}$; and when $l=\{20,21,22,...,29\}$, $m=\{24,25,26,...,47\}$. The three modulation constellation diagrams may be respectively a modulation constellation diagram 1, a modulation constellation diagram 2, and a modulation constellation diagram 3. The modulation symbols in $\Omega_1$ may be modulated by the sending apparatus by using the modulation constellation diagram 1, the modulation symbols in $\Omega_2$ may be modulated by the sending apparatus by using the modulation constellation diagram 2, and the modulation symbols corresponding to time domain units in $\Omega_3$ may be modulated by the sending apparatus by using the modulation constellation diagram 3.

It may be understood that index values of the time domain units in $\Omega_1$ are 0, 1, 2, ..., 9, 10, 11, 12, ..., 19, and 20, 21, 22, ..., 29, index values of the time domain units in $\Omega_2$ are 0, 1, 2, ..., 9, 10, 11, 12, ..., 19, and 20, 21, 22, ..., 29, and index values of time domain units in $\Omega_3$ are 0, 1, 2, ..., 9, 10, 11, 12, ..., 19, and 20, 21, 22, ..., 29. It can be learned that index values of time domain units corresponding to modulation symbols obtained based on the same modulation constellation diagram are continuous.

In the time domain units whose index values are 0, 1, 2, ..., and 9, modulation symbols whose index values are 0, 1, 2, ..., and 23 in each time domain unit are obtained through modulation based on the modulation constellation diagram 1, modulation symbols whose index values are 24, 25, 26, ..., and 47 in each time domain unit are obtained through modulation based on the modulation constellation diagram 2, and modulation symbols whose index values are 48, 49, 50, ..., and 71 in each time domain unit are obtained through modulation based on the modulation constellation diagram 3. It can be learned that index values of modulation symbols obtained based on different modulation constellation diagrams in the same time domain unit are continuous. This is the same for the time domain units whose index values are 10, 11, 12, ..., and 19 and the time domain units whose index values are 20, 21, 22, ..., and 29. Details are not described herein again.

If L=30, X=2, and M=72, in each of the two sets, index values of different time domain units corresponding to modulation symbols obtained based on a same modulation constellation diagram are continuous, and in a same time domain unit, index values of modulation symbols obtained based on a same modulation constellation diagram are continuous. The two sets may be respectively: $\Omega_1=\{d_{l*M+m}\}$, where when $l=\{0,1,2,...,14\}$, $m=\{0,1,2,...,35\}$; and when $l=\{15,16,17,..., 29\}$, $m=\{36,37,38,...,71\}$; and $\Omega_2=\{d_{l*M+m}\}$, where when $l=\{0,1,2,...,14\}$, $m=\{36,37,38,...,71\}$; and when $l=\{15,16,17,...,29\}$, $m=\{0,1,2,...,35\}$.

The two modulation constellation diagrams may be respectively a modulation constellation diagram 1 and a modulation constellation diagram 2. The modulation symbols in $\Omega_1$ may be modulated by the sending apparatus by using the modulation constellation diagram 1, and the modulation symbols in $\Omega_2$ may be modulated by the sending apparatus by using the modulation constellation diagram 2.

It may be understood that index values of the time domain units in $\Omega_1$ are 0, 1, 2, ..., 14, and 15, 16, 17, ..., 29, and index values of the time domain units in $\Omega_2$ are 0, 1, 2, ..., 14, and 15, 16, 17, ..., 29. It can be learned that index values of time domain units corresponding to modulation symbols obtained based on the same modulation constellation diagram are continuous.

In the time domain units whose index values are 0, 1, 2, ..., and 14, modulation symbols whose index values are 0, 1, 2, ..., and 35 in each time domain unit are obtained through modulation based on the modulation constellation diagram 1, and modulation symbols whose index values are 36, 37, 38, ..., and 71 in each time domain unit are obtained through modulation based on the modulation constellation diagram 2. It can be learned that index values of modulation symbols obtained based on different modulation constellation diagrams in the same time domain unit are continuous, and quantities of the modulation symbols are the same. This is the same for the time domain units whose index values are 15, 16, 17, ..., and 29. Details are not described herein again.

In another possible implementation, the L*M modulation symbols are unevenly allocated to the sets. In each set, index values of modulation symbols that correspond to a same time domain unit and that are obtained based on different modulation constellation diagrams are continuous (in other words, in the modulation symbols corresponding to the same time domain unit, index values of modulation symbols obtained based on different modulation constellation diagrams are continuous), and index values of different time domain units corresponding to modulation symbols obtained based on a same modulation constellation diagram are continuous. In addition, in modulation symbols corresponding to a same time domain unit, quantities of modulation symbols obtained based on different modulation constellation diagrams are different, and quantities of time domain units corresponding to modulation symbols obtained based on any two modulation constellation diagrams in the different modulation constellation diagrams are different.

If L=30, X=3, and M=72, index values of time domain units included in each of the three sets are continuous, and in modulation symbols corresponding to a same time domain unit, quantities of modulation symbols obtained based on different modulation constellation diagrams are different and index values of the modulation symbols are continuous. The three sets may be respectively: $\Omega_1=\{d_{l*M+m}\}$, where when $l=\{0,1,2,...,4\}$, $m=\{0,1,2,...,11\}$; when $l=\{5,6,7,...,14\}$, $m=\{12,13,14,...,35\}$; and when $l=\{15,16,17,...,29\}$, $m=\{36,37,38,...,71\}$; $\Omega_2=\{d_{l*M+m}\}$, where when $l=\{0,1,2,...,4\}$, $m=\{12,13,14,...,35\}$; when $l=\{5,6,7,...,14\}$, $m=\{48,49,50,..., 71\}$; and when $l=\{15,16,17,...,29\}$, $m=\{0,1,2,...,11\}$; and $\Omega_3=\{d_{l*M+m}\}$, where when $l=\{0,1,2,...,4\}$, $m=\{48,49,50,...,71\}$; when $l=\{5,6,7,...,14\}$, $m=\{0,1,2,...,11\}$; and when $l=\{15,16,17,...,29\}$, $m=\{12,13,14,..., 35\}$

The three modulation constellation diagrams may be respectively a modulation constellation diagram 1, a modulation constellation diagram 2, and a modulation constellation diagram 3. The modulation symbols in $\Omega_1$ may be modulated by the sending apparatus by using the modulation constellation diagram 1, the modulation symbols in $\Omega_2$ may be modulated by the sending apparatus by using the modulation constellation diagram 2, and the modulation symbols in $\Omega_3$ may be modulated by the sending apparatus by using the modulation constellation diagram 3.

It may be understood that index values of the time domain units in $\Omega_1$ are 0, 1, 2, ..., 4, 5, 6, 7, ..., 14, and 15, 16, 17, ..., 29, index values of the time domain units in $\Omega_2$ are 0, 1, 2, ..., 4, 5, 6, 7, ..., 14, and 15, 16, 17, ..., 29, and index values of time domain units in $\Omega_3$ are 0, 1, 2, ..., 4, 5, 6, 7, ..., 14, and 15, 16, 17, ..., 29. It can be learned that index values of time domain units corresponding to modulation symbols obtained based on the same modulation constellation diagram are continuous.

In the time domain units whose index values are 0, 1, 2, ..., and 4, modulation symbols whose index values are 0, 1, 2, ..., and 11 in each time domain unit are obtained through modulation based on the modulation constellation diagram 1, modulation symbols whose index values are 12, 13, 14, ..., and 35 in each time domain unit are obtained through modulation based on the modulation constellation diagram 2, and modulation symbols whose index values are 48, 49, 50, ..., and 71 in each time domain unit are obtained through modulation based on the modulation constellation diagram 3. It can be learned that index values of modulation symbols obtained based on different modulation constellation diagrams in the same time domain unit are continuous, but quantities of the modulation symbols are different. This is the same for the time domain units whose index values are 5, 6, 7, ..., and 14 and the time domain units whose index values are 15, 16, 17, ..., and 29. Details are not described herein again.

If L=30 and X=2, quantities of time domain units included in the two sets are different but index values of the time domain units are continuous, and in modulation symbols corresponding to a same time domain unit, quantities of modulation symbols obtained based on a same modulation constellation diagram are different but index values of the modulation symbols are continuous. The two sets may be respectively: $\Omega_1=\{d_{l*M+m}\}$, where when $l=\{0,1,2,...,9\}$, $m=\{0,1,2,...,23\}$; and when $l=\{10,11,12,...,29\}$, $m=\{24,25,26,...,71\}$; and $\Omega_2=\{d_{l*M+m}\}$, where when $l=\{0,1,2,...,9\}$, $m=\{24,25,26,...,71\}$; and when $l=\{10,11,12,...,29\}$, $m=\{0,1,2,..., 23\}$.

The two modulation constellation diagrams may be respectively a modulation constellation diagram 1 and a modulation constellation diagram 2. The modulation symbols in $\Omega_1$ may be modulated by the sending apparatus by using the modulation constellation diagram 1, and the modulation symbols in $\Omega_2$ may be modulated by the sending apparatus by using the modulation constellation diagram 2.

It may be understood that index values of the time domain units in $\Omega_1$ are 0, 1, 2, ..., 9, and 10, 11, 12, ..., 29, and index values of the time domain units in $\Omega_2$ are 0, 1, 2, ..., 9, and 10, 11, 12, ..., 29. It can be learned that index values of time domain units corresponding to modulation symbols obtained based on the same modulation constellation diagram are continuous.

In the time domain units whose index values are 0, 1, 2, ..., and 9, modulation symbols whose index values are 0, 1, 2, ..., and 23 in each time domain unit are obtained through modulation based on the modulation constellation diagram 1, and modulation symbols whose index values are 24, 25, 26, ..., and 71 in each time domain unit are obtained through modulation based on the modulation constellation diagram 2. It can be learned that index values of modulation symbols obtained based on different modulation constellation diagrams in the same time domain unit are continuous, but quantities of the modulation symbols are different. This is the same for the time domain units whose index values are 10, 11, 12, ..., and 29. Details are not described herein again.

In still another possible implementation, the L*M modulation symbols are evenly allocated to the sets, each set includes a same quantity of time domain units but index values of the time domain units are discontinuous, and the index values of the time domain units and index values of the sets satisfy a formula $\text{mod}(l, X)= i-1$, where the index values of the sets are the same as index values of modulation constellation diagrams.

In modulation symbols corresponding to a same time domain unit, quantities of modulation symbols obtained based on a same modulation constellation diagram are the same but index values of the modulation symbols are discontinuous, and the index values of the modulation symbols and the index values of the sets satisfy the formula $\text{mod}(m, X) = i-1$.

If L=30 and X=3, and M=72, each of the three sets may include modulation symbols corresponding to 10 time domain units, that is, 10*72=720 modulation symbols, and index values of the 10 time domain units and index values of the sets satisfy the formula $\text{mod}(l, X) = i-1$. Index values of modulation symbols that are in each of the 10 time domain units and that are obtained based on different modulation constellation diagrams and the index values of the sets satisfy the formula $\text{mod}(m, X) = i-1$. The three sets may be respectively: $\Omega_1=\{d_{l*M+m}\}$, where when $l=\{0,3,6,...,27\}$, $m=\{0,3,6,...,69\}$; when $l=\{1,4,7,...,28\}$, $m=\{1,4,7,...,70\}$; and when $l=\{2,5,8,...,29\}$, $m=\{2,5,8,...,71\}$; $\Omega_2=\{d_{l*M+m}\}$, where when $l=\{0,3,6,...,27\}$, $m=\{1,4,7,...,70\}$; when $l=\{1,4,7,...,28\}$, $m=\{2,5,8,...,71\}$; and when $l=\{2,5,8,...,29\}$, $m=\{0,3,6,...,69\}$; and $\Omega_3=\{d_{l*M+m}\}$, where when $l=\{0,3,6,...,27\}$, $m=\{2,5,8,...,71\}$; when $l=\{1,4,7,...,28\}$, $m=\{0,3,6,...,69\}$; and when $l=\{2,5,8,...,29\}$, $m=\{1,4,7,...,70\}$.

The three modulation constellation diagrams may be respectively a modulation constellation diagram 1, a modulation constellation diagram 2, and a modulation constellation diagram 3. The modulation symbols in $\Omega_1$ may be modulated by the sending apparatus by using the modulation constellation diagram 1, the modulation symbols in $\Omega_2$ may be modulated by the sending apparatus by using the modulation constellation diagram 2, and the modulation symbols in $\Omega_3$ may be modulated by the sending apparatus by using the modulation constellation diagram 3.

If L=30 and X=2, each of the two sets may include modulation symbols corresponding to 15 time domain units, and index values of the 15 time domain units and index values of the sets satisfy the formula $\text{mod}(l, X) = i-1$. Index values of modulation symbols that are in each of the 15 time domain units and that are obtained based on different modulation constellation diagrams and the index values of the sets satisfy the formula $\text{mod}(m, X) = i-1$. The two sets may be respectively: $\Omega_1=\{d_{l*M+m}\}$, where when $l=\{0,2,4,...,28\}$, $m=\{0,2,4,...,70\}$; and when $l=\{1,3,5,...,29\}$, $m=\{1,3,5,...,71\}$; and $\Omega_2=\{d_{l*M+m}\}$, where when $l=\{0,2,4,...,28\}$, $m=\{1,3,5,...,71\}$; and when $l=\{1,3,5,...,29\}$, $m=\{0,2,4,...,70\}$.

The two modulation constellation diagrams may be respectively a modulation constellation diagram 1 and a modulation constellation diagram 2. The modulation symbols in $\Omega_1$ may be modulated by the sending apparatus by using the modulation constellation diagram 1, and the modulation symbols in $\Omega_2$ may be modulated by the sending apparatus by using the modulation constellation diagram 2.

The sending apparatus performs different processing on the L*M modulation symbols, so that waveforms of the first signal can be different.

In a possible implementation, if the sending apparatus performs IDFT processing after performing DFT on the L*M modulation symbols, a waveform of the obtained first signal is DFT-s-ODFM.

In an $l^{th}$ time domain unit in the L time domain units, the sending apparatus may perform, based on M subcarriers allocated for transmission, DFT processing on modulation symbols corresponding to the $l^{th}$ time domain unit, to obtain an output $y_{l*M+k}$ obtained through the DFT processing, where $k=\{0,1,...,M-1\}$.

For example, $y_{l*M+k}$ may be represented by the following formula:

$$y_{l*M+k} = \frac{1}{\sqrt{M}} \sum_{m=0}^{M-1} d_{l*M+m} * e^{-j\frac{2\pi}{M}mk}$$

, where

$d_{l*M+m}$ represents a modulation symbol whose index value is $m$ in the modulation symbols corresponding to the $l^{th}$ time domain unit, and $m=\{0,1,...,M-1\}$.

An input length of the DFT is equal to a quantity of modulation symbols corresponding to a time domain unit, that is, the length is M. If an input length N of the IDFT is equal to M, the sending apparatus directly performs IDFT processing on $y_{l*M+k}$. If the input length N of the IDFT is greater than M, the sending apparatus may first perform subcarrier mapping on $y_{l*M+k}$ whose length is M, to obtain $y'_{l*M+k}$ whose length is N, and then perform IDFT processing on $y'_{l*M+k}$.

The sending apparatus may perform a zero padding operation on $y_{l*M+k}$ whose length is M, to obtain $y'_{l*M+k}$ whose length is N. In this case, locations of zeros in $y'_{l*M+k}$ may be scattered or centralized. This is not limited in this embodiment of this application. In other words, locations of $y_{l*M+k}$ in $y'_{l*M+k}$ may be a part of continuous centralized locations, or may be distributed discrete locations.

The sending apparatus may perform IDFT processing on $y'_{l*M+k}$ whose length is N based on N subcarriers allocated for transmission, to obtain $s_n$, where $n=\{0,1,...,N-1\}$. The sending apparatus may obtain the first signal based on $s_n$.

For example, $s_n$ may be represented by the following formula:

$$s_n = \frac{1}{\sqrt{N}} \sum_{n=0}^{N-1} y'_{l*M+n} * e^{j\frac{2\pi}{N}kn}$$

.

In another possible implementation, if the sending apparatus performs IDFT processing on the modulation symbols corresponding to the L time domain units, a waveform of the obtained first signal is an ODFM waveform.

In an $l^{th}$ time domain unit in the L time domain units, if an input length N of the IDFT is equal to M, the sending apparatus directly performs IDFT processing on the modulation symbols $d_{l*M+m}$. If the input length N of the IDFT is greater than M, the sending apparatus may first perform subcarrier mapping on the modulation symbols $d_{l*M+m}$ whose length is M, to obtain modulation symbols $d_{l*M+n}$ whose length is N, and then perform IDFT processing on the modulation symbols $d_{l*M+n}$ whose length is N.

The sending apparatus may perform a zero padding operation on the modulation symbols $d_{l*M+m}$ whose length is M, to obtain the modulation symbols $d_{l*M+n}$ whose length is N. In this case, locations of zeros in the modulation symbols $d_{l*M+n}$ whose length is N may be scattered or centralized. This is not limited in this embodiment of this application. In other words, locations of the modulation symbols $d_{l*M+m}$ whose length is M in the modulation symbols $d_{l*M+n}$ whose length is N may be a part of continuous centralized locations, or may be distributed discrete locations.

The sending apparatus may perform IDFT processing on the modulation symbols $d_{l*M+n}$ whose length is N based on N subcarriers allocated for transmission, to obtain $s'_n$, where $n=\{0,1,...,N-1\}$. The sending apparatus may obtain the first signal based on $s'_n$.

For example, $s'_n$ may be represented by the following formula:

$$s'_n = \frac{1}{\sqrt{N}} \sum_{n=0}^{N-1} d_{l*M+n} * e^{j\frac{2\pi}{N}kn}$$

,

where

$d_{l^*M+n}$ represents a modulation symbol whose index value is $n$ in the N modulation symbols, and $n=\{0,1,...,N-1\}$.

In the foregoing example, the L*M modulation symbols are obtained by modulating a bit sequence based on different modulation constellation diagrams. The bit sequence may include bits in one bit sequence, or may include bits in a plurality of bit sequences. This is not limited in this embodiment of this application.

The foregoing describes in detail the correspondence between the at least two modulation symbols obtained based on the different modulation constellation diagrams and the time domain units. The following describes in detail different modulation constellation diagrams.

In an optional embodiment, there may be a phase shift between any two modulation constellation diagrams in different modulation constellation diagrams. In other words, there may be a phase shift angle between any two modulation constellation diagrams in different modulation constellation diagrams. This is not limited in this embodiment of this application.

The phase shift angle may be an angle generated by clockwise rotation or counterclockwise rotation of one modulation constellation diagram relative to another modulation constellation diagram. This is not limited in this embodiment of this application.

There are a plurality of possible implementations of a value of a phase shift.

In a possible implementation, a range of the phase shift is ($-\frac{\pi}{2}+2\pi p$, $2\pi p$) or ($2\pi p$, $\frac{\pi}{2}+2\pi p$), where $p$ is an integer.

In another possible implementation, the phase shift is not equal to $\frac{2\pi p}{2^Q}$, where $p$ is an integer, and $Q$ is a modulation order; or the phase shift is not equal to $\frac{\pi p}{2}$.

For example, FIG. 7 is a diagram of different modulation constellation diagrams. As shown in FIG. 7, there are three modulation constellation diagrams: a modulation constellation diagram 1, a modulation constellation diagram 2, and a modulation constellation diagram 3. A phase shift angle between the modulation constellation diagram 1 and the modulation constellation diagram 2 is $\theta_1$, and a phase shift angle between the modulation constellation diagram 1 and the modulation constellation diagram 3 is $\theta_2$, where $\theta_1 \neq \theta_2$.

A mapping table between a bit and a modulation symbol in the modulation constellation diagram 1 is shown in Table 1.

Table 1

| Bit | Modulation symbol |
|---|---|
| 00 | $\frac{1}{\sqrt{2}}(1+j)$ |
| 01 | $\frac{1}{\sqrt{2}}(1-j)$ |
| 11 | $\frac{1}{\sqrt{2}}(-1-j)$ |
| 10 | $\frac{1}{\sqrt{2}}(-1+j)$ |

As shown in Table 1, a bit 00 may be mapped to a modulation symbol $\frac{1}{\sqrt{2}}(1+j)$ based on the modulation constellation diagram 1, a bit 01 may be mapped to a modulation symbol $\frac{1}{\sqrt{2}}(1-j)$ based on the modulation constellation diagram 1, a bit 11 may be mapped to a modulation symbol $\frac{1}{\sqrt{2}}(-1-j)$ based on the modulation constellation diagram 1, and a bit 10 may be mapped to a modulation symbol $\frac{1}{\sqrt{2}}(-1+j)$ based on the modulation
constellation diagram 1.

A mapping table between a bit and a modulation symbol in the modulation constellation diagram 2 is shown in Table 2.

Table 2

| Bit | Modulation symbol |
|-----|-------------------|
| 00 | $\frac{1}{\sqrt{2}}(1+j)*e^{j\theta_1}$ |
| 01 | $\frac{1}{\sqrt{2}}(1-j)*e^{j\theta_1}$ |
| 11 | $\frac{1}{\sqrt{2}}(-1-j)*e^{j\theta_1}$ |
| 10 | $\frac{1}{\sqrt{2}}(-1+j)*e^{j\theta_1}$ |

As shown in Table 2, a bit 00 may be mapped to a modulation symbol $\frac{1}{\sqrt{2}}(1+j)*e^{j\theta_1}$ based on the modulation constellation diagram 1, a bit 01 may be mapped to a modulation symbol $\frac{1}{\sqrt{2}}(1-j)*e^{j\theta_1}$ based on the modulation constellation diagram 1, a bit 11 may be mapped to a modulation symbol $\frac{1}{\sqrt{2}}(-1-j)*e^{j\theta_1}$ based on the modulation constellation diagram 1, and a bit 10 may be mapped to a modulation symbol $\frac{1}{\sqrt{2}}(-1+j)*e^{j\theta_1}$ based on
the modulation constellation diagram 1.

A mapping table between a bit and a modulation symbol in the modulation constellation diagram 3 is shown in Table 3.

Table 3

| Bit | Modulation symbol |
|-----|-------------------|
| 00 | $\frac{1}{\sqrt{2}}(1+j)*e^{j\theta_2}$ |
| 01 | $\frac{1}{\sqrt{2}}(1-j)*e^{j\theta_2}$ |
| 11 | $\frac{1}{\sqrt{2}}(-1-j)*e^{j\theta_1}$ |

(continued)

| Bit | Modulation symbol |
|---|---|
| 10 | $\dfrac{1}{\sqrt{2}}(-1+j)*e^{j\theta_2}$ |

There may be a plurality of possible cases for values of $\theta_1$ and $\theta_2$.

In a possible implementation, the phase shifts of the modulation constellation diagram 2 and the modulation constellation diagram 3 may be both obtained through clockwise rotation relative to the modulation constellation diagram 1. $\theta_1$ and $\theta_2$ may satisfy $-\dfrac{\pi}{2} < \theta_2 < \theta_1 < 0$, where $\theta_1$ may be $-\dfrac{\pi}{6}$, and $\theta_2$ may be $-\dfrac{\pi}{3}$. However, this embodiment of this application is not limited thereto.

In another possible implementation, the phase shifts of the modulation constellation diagram 2 and the modulation constellation diagram 3 may be both obtained through counterclockwise rotation relative to the modulation constellation diagram 1. $\theta_1$ and $\theta_2$ may satisfy $0 < \theta_1 < \theta_2 < \dfrac{\pi}{2}$, where $\theta_1$ may be $\dfrac{\pi}{6}$, and $\theta_2$ may be $\dfrac{\pi}{3}$. However, this embodiment of this application is not limited thereto.

In still another possible implementation, the phase shift of the modulation constellation diagram 2 is obtained through clockwise rotation relative to the modulation constellation diagram 1, and the phase shift of the modulation constellation diagram 3 is obtained through counterclockwise rotation relative to the modulation constellation diagram 1. $\theta_1$ may satisfy $-\dfrac{\pi}{2} < \theta_1 < 0$, and $\theta_2$ may satisfy $0 < \theta_2 < \dfrac{\pi}{2}$, where $\theta_1$ may be $-\dfrac{\pi}{6}$, and $\theta_2$ may be $\dfrac{\pi}{6}$. However, this embodiment of this application is not limited thereto.

In another possible implementation, the phase shift of the modulation constellation diagram 2 is obtained through counterclockwise rotation relative to the modulation constellation diagram 1, and the phase shift of the modulation constellation diagram 3 is obtained through clockwise rotation relative to the modulation constellation diagram 1. $\theta_1$ may satisfy $0 < \theta_1 < \dfrac{\pi}{2}$, and $\theta_2$ may satisfy $-\dfrac{\pi}{2} < \theta_2 < 0$, where $\theta_1$ may be $\dfrac{\pi}{6}$, and $\theta_2$ may be $-\dfrac{\pi}{6}$. However, this embodiment of this application is not limited thereto.

For another example, there may be three modulation constellation diagrams: a modulation constellation diagram 1 and a modulation constellation diagram 2. A phase shift angle between the modulation constellation diagram 1 and the modulation constellation diagram 2 may be $\theta$. Mapping between a bit and a modulation symbol in the modulation constellation diagram 1 may be shown in Table 1, and mapping between a bit and a modulation symbol in the modulation constellation diagram 2 may be shown in Table 2.

There may be a plurality of possible cases for a value of $\theta$.

In a possible implementation, the phase shift of the modulation constellation diagram 2 is obtained through clockwise rotation relative to the modulation constellation diagram 1. $\theta$ may satisfy $-\dfrac{\pi}{2} < \theta < 0$, where $\theta$ may be $-\dfrac{\pi}{4}$. However, this embodiment of this application is not limited thereto.

In another possible implementation, the phase shift of the modulation constellation diagram 2 is obtained through counterclockwise rotation relative to the modulation constellation diagram 1. $\theta$ may satisfy $0 < \theta < \dfrac{\pi}{2}$, where $\theta$ may be $\dfrac{\pi}{4}$. However, this embodiment of this application is not limited thereto.

In an optional embodiment, the foregoing method 300 may further include: The sending apparatus sends first indication information, where the first indication information indicates the different modulation constellation diagrams. Correspondingly, the receiving apparatus receives the first indication information.

The receiving apparatus may demodulate the plurality of modulation symbols based on the modulation constellation diagrams indicated by the sending apparatus.

According to the data processing method provided in this embodiment of this application, the sending apparatus sends, to a receiving apparatus, the indication information indicating the different modulation constellation diagrams, so that the receiving apparatus can determine the different modulation constellation diagrams based on the indication information, and a fixed modulation constellation diagram does not need to be preset. Therefore, flexibility is higher.

Optionally, the first indication information may include a phase shift between any two modulation constellation diagrams in the different modulation constellation diagrams.

For example, in the example shown in FIG. 7, the first indication information may include the phase shift 0 of the modulation constellation diagram 1, the phase shift $\theta_1$ of the modulation constellation diagram 2, and the phase shift $\theta_2$ of the modulation constellation diagram 3.

Optionally, the first indication information may include phase shifts of modulation constellation diagrams corresponding to the plurality of modulation symbols.

The modulation constellation diagrams corresponding to the plurality of modulation symbols may be understood as modulation constellation diagrams used for modulation of the plurality of modulation symbols.

The first indication information may include a phase shift of a modulation constellation diagram corresponding to each of the plurality of modulation symbols, or may include a phase shift of each of the different modulation constellation diagrams and a quantity and index values of modulation symbols obtained based on a same modulation constellation diagram. This is not limited in this embodiment of this application.

For example, one time domain unit corresponds to M modulation symbols. In this case, the first indication information includes phase shifts of modulation constellation diagrams corresponding to the M modulation symbols. If the phase shifts of the modulation constellation diagrams corresponding to the M modulation symbols are represented by a column vector, the column vector may be $\begin{bmatrix} \theta_{v1} \\ \theta_{v2} \\ \vdots \\ \theta_{vM} \end{bmatrix}$. The phase shifts of the modulation constellation diagrams corresponding to the M modulation symbols are phase shifts of the modulation symbols before DFT or IDFT processing, and a value range of the phase shifts may be $(-\frac{\pi}{2}, \frac{\pi}{2})$. The receiving apparatus may demodulate the M modulation symbols based on the phase shifts in the column vector.

The column vector may be represented in many different forms.

In a possible implementation, the column vector may be divided into X sub column vectors, each sub column vector has a same quantity of elements, each sub column vector has a same element value, and different sub column vectors have different element values.

It may be understood that phase shifts corresponding to modulation symbols modulated based on a same modulation constellation diagram are the same, and may form a sub column vector. If there are X modulation constellation diagrams, there may be X sub column vectors. The column vector may be divided into X sub column vectors, where each sub column vector has a same element value. If quantities of modulation symbols obtained based on different modulation constellation diagrams are the same, each sub column vector has a same quantity of elements.

In another possible implementation, the column vector may be divided into X sub column vectors, each sub column vector has a different quantity of elements, each sub column vector has a same element value, and different sub column vectors have different element values.

It may be understood that phase shifts corresponding to modulation symbols modulated based on a same modulation constellation diagram are the same, and may form a sub column vector. If there are X modulation constellation diagrams, there may be X sub column vectors. The column vector may be divided into X sub column vectors, where each sub column vector has a same element value. If quantities of modulation symbols obtained based on different modulation constellation diagrams are different, each sub column vector has a different quantity of elements.

In still another possible implementation, values of elements at comb structure locations in the column vector are the same. In other words, values of elements with an equal quantity of intervals are the same. The comb structure means that elements at adjacent locations are different, and same elements may be spaced by one or more locations.

If the column vector is a comb 2-spaced column vector, a phase shift of an even-numbered element may be 0, and a phase shift of an odd-numbered element may be $\frac{\pi}{4}$. However, this embodiment of this application is not limited thereto.

If the column vector is a comb 3-spaced column vector, the phase shift values may be 0, $\frac{\pi}{6}$, and $\frac{\pi}{3}$ in sequence. However, this embodiment of this application is not limited thereto.

For another example, if modulation symbols corresponding to a same time domain unit are obtained based on a same modulation constellation diagram, at least two time domain units in different time domain units are obtained based on different modulation constellation diagrams, and the different time domain units include L time domain units, the first indication information may include phase shifts of modulation constellation diagrams corresponding to the L time domain units. If the phase shifts of the modulation constellation diagrams corresponding to the L time domain units are represented by a row vector, the row vector may be $[\theta_{h1}, \theta_{h2}, ..., \theta_{hL}]$. A value range of the phase shifts may be $(-\frac{\pi}{2}, \frac{\pi}{2})$. The receiving apparatus may demodulate, based on the phase shifts in the row vector, the modulation symbols corresponding to the L time domain units.

The row vector may be represented in many different forms.

In a possible implementation, the row vector may be divided into X sub row vectors, each sub row vector has a same quantity of elements, each sub row vector has a same element value, and different sub row vectors have different element values.

It may be understood that phase shifts of time domain units corresponding to modulation symbols modulated based on a same modulation constellation diagram are the same, and the phase shifts of the time domain units may form a sub row vector. If there are X modulation constellation diagrams, there may be X sub row vectors. The row vector may be divided into X sub row vectors, where each sub row vector has a same element value. If quantities of time domain units corresponding to modulation symbols obtained based on different modulation constellation diagrams are the same, each sub row vector has a same quantity of elements.

In another possible implementation, the row vector may be divided into X sub row vectors, each sub row vector has a different quantity of elements, each sub row vector has a same element value, and different sub row vectors have different element values.

It may be understood that phase shifts of time domain units corresponding to modulation symbols modulated based on a same modulation constellation diagram are the same, and the phase shifts of the time domain units may form a sub row vector. If there are X modulation constellation diagrams, there may be X sub row vectors. The row vector may be divided into X sub row vectors, where each sub row vector has a same element value. If quantities of time domain units corresponding to modulation symbols obtained based on different modulation constellation diagrams are different, each sub row vector has a different quantity of elements.

In still another possible implementation, values of elements at comb structure locations in the row vector are the same. In other words, values of elements with an equal quantity of intervals are the same.

If the row vector is a comb 2-spaced row vector, a phase shift of an even-numbered element may be 0, and a phase shift of an odd-numbered element may be $\frac{\pi}{4}$. However, this embodiment of this application is not limited thereto.

If the row vector is a comb 3-spaced column vector, the phase shift values may be 0, $\frac{\pi}{6}$, and $\frac{\pi}{3}$ in sequence. However, this embodiment of this application is not limited thereto.

For another example, if modulation symbols corresponding to a same time domain unit are obtained based on different modulation constellation diagrams, at least two time domain units in different time domain units are obtained based on different modulation constellation diagrams, the different time domain units include L time domain units, and a same time domain unit corresponds to M modulation symbols, the first indication information may include phase shifts of modulation constellation diagrams corresponding to L*M modulation symbols. If the phase shifts of the modulation constellation diagrams corresponding to the L*M modulation symbols are represented by a two-dimensional matrix, the two-dimensional matrix may be $\begin{bmatrix} \theta_{h1,v1} & \theta_{h2,v1}, \dots \theta_{hL,v1} \\ \theta_{h1,v2} & \theta_{h2,v1} \dots \theta_{hL,v2} \\ \vdots & \vdots & \vdots & \vdots \\ \theta_{h1,vM} & \theta_{h2,vM} \dots \theta_{hL,vM} \end{bmatrix}$. A value range of the phase shifts may be $(-\frac{\pi}{2}, \frac{\pi}{2})$. The receiving apparatus may demodulate the L*M modulation symbols based on the phase shifts in the two-dimensional matrix.

The two-dimensional matrix may be represented in many different forms.

In a possible implementation, the two-dimensional matrix may be divided into X two-dimensional submatrices, each two-dimensional submatrix has a same quantity of elements, each two-dimensional submatrix has a same element value, and different two-dimensional submatrices have different element values.

It may be understood that phase shifts corresponding to modulation symbols modulated based on a same modulation constellation diagram are the same, and phase shifts of time domain units corresponding to the modulation

**EP 4 535 741 A1**

symbols are the same. A two-dimensional submatrix may be combined from a dimension of a time domain unit and a dimension of a modulation symbol. If there are X modulation constellation diagrams, there may be X two-dimensional submatrices. The two-dimensional matrix may be divided into X two-dimensional submatrices, where each two-dimensional submatrix has a same element value, and different two-dimensional submatrices have different element values. If quantities of modulation symbols obtained based on different modulation constellation diagrams are the same, each two-dimensional submatrix has a same quantity of elements.

In another possible implementation, the two-dimensional matrix may be divided into X two-dimensional submatrices, each two-dimensional submatrix has a different quantity of elements, each two-dimensional submatrix has a same element value, and different two-dimensional submatrices have different element values.

It may be understood that phase shifts corresponding to modulation symbols modulated based on a same modulation constellation diagram are the same, and phase shifts of time domain units corresponding to the modulation symbols are the same. A two-dimensional submatrix may be combined from a dimension of a time domain unit and a dimension of a modulation symbol. If there are X modulation constellation diagrams, there may be X two-dimensional submatrices. The two-dimensional matrix may be divided into X two-dimensional submatrices, where each two-dimensional submatrix has a same element value, and different two-dimensional submatrices have different element values. If quantities of modulation symbols obtained based on different modulation constellation diagrams are different, each two-dimensional submatrix has a different quantity of elements.

In still another possible implementation, values of elements at comb structure locations in the two-dimensional matrix are the same. In other words, values of elements with an equal quantity of intervals are the same.

If the two-dimensional matrix is a mesh 2-spaced row vector, phase shifts of an element in an even-numbered row and an even-numbered column and an element in an odd-numbered row and an odd-numbered column may be 0, and phase shifts of an element in an even-numbered row and an odd-numbered column and an element in an odd-numbered row and an even-numbered column may be $\dfrac{\pi}{4}$ . However, this embodiment of this application is not limited thereto.

If the two-dimensional matrix is a mesh 3-spaced column vector, the phase shift values may be 0, $\dfrac{\pi}{6}$ , and $\dfrac{\pi}{3}$ in sequence. However, this embodiment of this application is not limited thereto.

It should be noted that, for the foregoing phase shift, constellation points in a same modulation constellation diagram have a same phase shift. In addition, constellation points in a same modulation constellation diagram may alternatively have different phase shifts. For example, in QPSK, a modulation constellation diagram includes four constellation points, and the four constellation points may have independent phase shifts. In this case, there may be four phase shifts.

The sending apparatus sends the first indication information to the receiving apparatus, where the first indication information is configurable, and the first indication information may be configured in a plurality of configuration manners.

A first configuration manner may be referred to as a static configuration manner.

The first indication information is carried in radio resource control (radio resource control, RRC) signaling, and the RRC signaling further includes indication information of start time of the first signal.

The RRC signaling may also be referred to as an RRC configuration message. This is not limited in this embodiment of this application.

The sending apparatus may send the RRC signaling to the receiving apparatus, where the RRC signaling includes the indication information of the start time of the first signal, and the indication information of the start time of the first signal indicates the start time of the first signal. After receiving the first indication information, the receiving apparatus may determine the different modulation constellation diagrams based on the phase shifts of the different modulation constellation diagrams. The receiving apparatus may determine, based on the indication information of the start time of the first signal, time at which the first signal is received, so that after receiving the first signal, the receiving apparatus demodulates the plurality of modulation symbols based on the different modulation constellation diagrams.

The first indication information may directly indicate the start time of the first signal, or may indirectly indicate the start time of the first signal. This is not limited in this embodiment of this application.

Optionally, the indication information of the start time of the first signal includes the start time of the first signal or a time offset from the first indication information, and the time offset indicates the start time of the first signal.

That the first indication information includes the start time of the first signal may be understood as a direct indication manner. That the first indication information includes the time offset from the first indication information may be understood as an indirect indication manner. The receiving apparatus may determine the start time of the first signal based on the time offset from the first indication information.

It should be understood that the static configuration manner means that the first indication information is preconfigured by using the RRC signaling, and the start time of the first signal is further configured in the RRC signaling. To be specific, when the start time of the first signal arrives, the receiving apparatus uses content in the first indication information. In other words, both time at which the first indication information is used and the first indication information are preconfigured.

In this configuration manner, the first indication information and the indication information of the start time of the first signal are preconfigured, and no indication information needs to be sent. This can save signaling.

A second configuration manner may be referred to as a semi-static configuration manner.

The first indication information is carried in radio resource control RRC signaling. The foregoing method 300 further includes: The sending apparatus sends second indication information to the receiving apparatus, where the second indication information includes time at which the first indication information is activated. Correspondingly, the receiving apparatus receives the second indication information.

The sending apparatus may send the RRC signaling to the receiving apparatus, where the RRC signaling includes the first indication information. When receiving the RRC signaling, the receiving apparatus cannot obtain content of the first indication information. After receiving the second indication information from the sending apparatus, the receiving apparatus may obtain the first indication information based on the time at which the first indication information is activated, to determine the different modulation constellation diagrams. After the first signal is received, the plurality of modulation symbols may be demodulated based on the different modulation constellation diagrams.

It should be noted that when the sending apparatus does not send a signal to the receiving apparatus, the sending apparatus needs to send deactivation indication information to the receiving apparatus, to indicate the receiving apparatus to deactivate the first indication information. Activating the first indication information means enabling the first indication information, and deactivating the first indication information means disabling the first indication information.

It should be understood that the semi-static configuration manner means that the first indication information is preconfigured by using the RRC signaling, and the time at which the content in the first indication information is used is indicated by using the second indication information. When receiving the second indication information, the receiving apparatus uses the content in the first indication information. In other words, when the first indication information is preconfigured, but the time at which the first indication information is used is indicated, when required by the receiving apparatus, by the sending apparatus by using the second indication information.

Optionally, the second indication information may be carried in downlink control information (downlink control information, DCI) or a media access control protocol-control element (medium access control-control element, MAC-CE).

In this configuration manner, the first indication information is preconfigured, and the time at which the first indication information is activated is dynamically indicated. This can save some signaling and increase some flexibility.

A third configuration manner may be referred to as a dynamic configuration manner.

The first indication information is carried in DCI.

The sending apparatus sends the first indication information to the receiving apparatus by using the DCI. The terminal device receives the DCI, obtains the first indication information, and determines the different modulation constellation diagrams. After receiving the first signal, the plurality of modulation symbols may be demodulated based on the different modulation constellation diagrams.

It should be understood that the dynamic configuration manner means that the first indication information does not need to be preconfigured. When the receiving apparatus demodulates the plurality of modulation symbols, the sending apparatus may send the first indication information to the receiving apparatus. After receiving the first indication information, the receiving apparatus may determine the different modulation constellation diagrams, and demodulate the plurality of modulation symbols. In other words, when the receiving apparatus needs the content of the first indication information, the sending apparatus indicates the content by using the DCI.

In this configuration manner, the first indication information is dynamically indicated, so that flexibility is higher.

The sequence numbers of the foregoing processes do not mean execution sequences. The execution sequences of the processes should be determined based on functions and internal logic of the processes, and should not constitute any limitation on implementation processes of embodiments of this application.

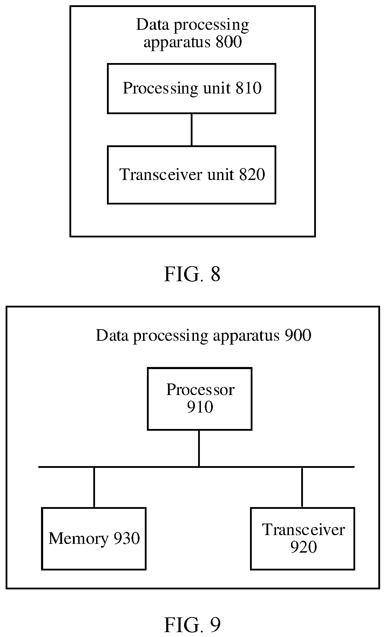

The foregoing describes in detail the method in embodiments of this application with reference to FIG. 1 to FIG. 7. The following describes in detail an apparatus in embodiments of this application with reference to FIG. 8 to FIG. 9.

FIG. 8 is a block diagram of a data processing apparatus 800 according to an embodiment of this application. As shown in FIG. 8, the data processing apparatus 800 may include a processing unit 810 and a transceiver unit 820. In some examples, the data processing apparatus 800 may also be referred to as a communication apparatus.

In a possible implementation, the data processing apparatus 800 may perform the steps performed by the sending apparatus in the method 300.

The processing unit 810 is configured to: generate a plurality of modulation symbols, where the plurality of modulation symbols correspond to different time domain units, a same time domain unit corresponds to at least two modulation symbols in the plurality of modulation symbols, and at least two modulation symbols in the plurality of modulation symbols are obtained through modulation based on different modulation constellation diagrams; and generate a first signal based on the plurality of modulation symbols. The transceiver unit 820 is configured to send the first signal.

In another possible implementation, the data processing apparatus 800 may perform the steps performed by the receiving apparatus in the method 300.

The transceiver unit 820 is configured to receive a first signal, where the first signal is generated based on a plurality of modulation symbols, the plurality of modulation symbols correspond to different time domain units, a same time domain unit corresponds to at least two modulation symbols in the plurality of modulation symbols, and at least two modulation symbols in the plurality of modulation symbols are obtained through modulation based on different modulation constellation diagrams. The processing unit 810 is configured to process the first signal.

It should be understood that the data processing apparatus 800 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the data processing apparatus 800 may be specifically the sending apparatus or the receiving apparatus in the foregoing embodiments, and the data processing apparatus 800 may be configured to perform the procedures and/or steps corresponding to the sending apparatus or the receiving apparatus in the foregoing method embodiments. To avoid repetition, details are not described herein again.

The data processing apparatus 800 in the foregoing solutions has a function of implementing corresponding steps performed by the sending apparatus or the receiving apparatus in the foregoing method. The function may be implemented by hardware, or may be implemented by hardware executing corresponding software. The hardware or the software includes one or more modules corresponding to the function.

In this embodiment of this application, the data processing apparatus 800 in FIG. 8 may alternatively be a chip or a chip system, for example, a system on chip (system on chip, SoC).

FIG. 9 is a block diagram of another data processing apparatus 900 according to an embodiment of this application. As shown in FIG. 9, the data processing apparatus 900 includes a processor 910, a transceiver 920, and a memory 930. The processor 910, the transceiver 920, and the memory 930 communicate with each other by using an internal connection path. The memory 930 is configured to store an instruction. The processor 910 is configured to execute the instruction stored in the memory 930, to control the transceiver 920 to send a signal and/or to receive a signal.

It should be understood that the data processing apparatus 900 may be specifically the sending apparatus or the receiving apparatus in the foregoing embodiments, and may be configured to perform steps and/or procedures corresponding to the sending apparatus or the receiving apparatus in the foregoing method embodiments. Optionally, the memory 930 may include a read-only memory and a random access memory, and provide instructions and data for the processor. A part of the memory may further include a non-volatile random access memory. For example, the memory may further store information of a device type. The processor 910 may be configured to execute the instructions stored in the memory, and when the processor 910 executes the instructions stored in the memory, the processor 910 is configured to perform the steps and/or procedures corresponding to the sending apparatus or the receiving apparatus in the foregoing method embodiments. The transceiver 920 may include a transmitter and a receiver. The transmitter may be configured to implement steps and/or procedures that correspond to the transceiver and that are used to perform a sending action, and the receiver may be configured to implement steps and/or procedures that correspond to the transceiver and that are used to perform a receiving action.

It should be understood that, in embodiments of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods can be implemented by using a hardware integrated logic circuit in the processor, or by using instructions in a form of software. The steps of the methods disclosed with reference to embodiments of this application may be directly performed by a hardware processor, or may be performed by a combination of hardware and software units in the processor. A software unit may be located in a mature storage medium in the art, such as a random access memory, a flash memory, a read-only memory, a programmable read-only memory, an electrically erasable programmable memory, a register, or the like. The storage medium is located in the memory, and a processor reads instructions in the memory and completes the steps in the foregoing methods in combination with hardware of the processor. To avoid repetition, details are not described herein again.

An embodiment of this application further provides a communication system. The communication system may include the sending apparatus and the receiving apparatus in the foregoing embodiments.

An embodiment of this application provides a readable computer storage medium. The readable computer storage medium is configured to store a computer program, and the computer program is used to implement the method corresponding to the sending apparatus shown in the possible implementations in the foregoing embodiments.

An embodiment of this application provides another readable computer storage medium. The readable computer storage medium is configured to store a computer program, and the computer program is used to implement the method corresponding to the receiving apparatus shown in the possible implementations in the foregoing embodiments.

An embodiment of this application provides a computer program product. The computer program product includes a computer program (which may also be referred to as code or instructions). When the computer program is run on a computer, the computer may perform the method corresponding to the sending apparatus shown in the foregoing embodiments.

An embodiment of this application provides another computer program product. The computer program product includes a computer program (which may also be referred to as code or instructions). When the computer program is run on a computer, the computer may perform the method corresponding to the receiving apparatus shown in the possible implementations in the foregoing embodiments.

An embodiment of this application provides a chip system. The chip system is configured to support the sending apparatus in implementing the function shown in embodiments of this application.

An embodiment of this application provides another chip system. The chip system is configured to support the receiving apparatus in implementing the function shown in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions in this application essentially, or the part contributing to a conventional technology, or some of the technical solutions may be represented in a form of a software product. The computer software product is stored in a storage medium and includes several instructions for instructing a computer device (which may be a personal computer, a server, a receive end, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data processing method, comprising:

   generating, by a sending apparatus, a plurality of modulation symbols, wherein the plurality of modulation symbols correspond to different time domain units, a same time domain unit corresponds to at least two modulation symbols in the plurality of modulation symbols, and at least two modulation symbols in the plurality of modulation symbols are obtained through modulation based on different modulation constellation diagrams; generating, by the sending apparatus, a first signal based on the plurality of modulation symbols; and sending, by the sending apparatus, the first signal.

2. A data processing method, comprising:

receiving, by a receiving apparatus, a first signal, wherein the first signal is generated based on a plurality of modulation symbols, the plurality of modulation symbols correspond to different time domain units, a same time domain unit corresponds to at least two modulation symbols in the plurality of modulation symbols, and at least two modulation symbols in the plurality of modulation symbols are obtained through modulation based on different modulation constellation diagrams; and processing, by the receiving apparatus, the first signal.

3. The method according to claim 1 or 2, wherein the at least two modulation symbols obtained through modulation based on the different modulation constellation diagrams in the plurality of modulation symbols correspond to a same time domain unit.

4. The method according to claim 3, wherein quantities of modulation symbols obtained based on the different modulation constellation diagrams are the same.

5. The method according to claim 3 or 4, wherein the different modulation constellation diagrams comprise a first modulation constellation diagram, and index values of modulation symbols obtained based on the first modulation constellation diagram are discontinuous.

6. The method according to claim 5, wherein a correspondence between index values of the different modulation constellation diagrams and index values of the modulation symbols obtained based on the different modulation constellation diagrams satisfies the following formula:

$$\mathrm{mod}(m, \mathrm{X}) = i - 1,$$

wherein
$m$ is the index values of the plurality of modulation symbols, X is a quantity of the different modulation constellation diagrams, X is an integer greater than or equal to 2, mod() is a modulo operation, $i$ is the index values of the different modulation constellation diagrams, and $i=\{1,...,X\}$.

7. The method according to claim 1 or 2, wherein the at least two modulation symbols obtained through modulation based on the different modulation constellation diagrams in the plurality of modulation symbols correspond to different time domain units.

8. The method according to claim 1 or 2, wherein at least two modulation symbols in modulation symbols corresponding to different time domain units are obtained through modulation based on the different modulation constellation diagrams, and at least two modulation symbols in modulation symbols corresponding to a same time domain unit are obtained through modulation based on the different modulation constellation diagrams.

9. The method according to claim 7 or 8, wherein modulation symbols obtained based on the different modulation constellation diagrams correspond to a same quantity of time domain units.

10. The method according to claims 7 to 9, wherein the different modulation constellation diagrams comprise a first modulation constellation diagram, and index values of time domain units corresponding to modulation symbols obtained based on the first modulation constellation diagram are discontinuous.

11. The method according to claim 10, wherein index values of the different modulation constellation diagrams and index values of the different time domain units satisfy the following formula:

$$\mathrm{mod}(l, \mathrm{X}) = i - 1,$$

, wherein

$l$ is the index values of the different time domain units, X is a quantity of the different modulation constellation diagrams, X is an integer greater than or equal to 2, mod() is a modulo operation, $i$ is the index values of the different modulation constellation diagrams, and $i=\{1,...,X\}$.

12. The method according to any one of claims 1 to 11, wherein there is a phase shift between any two modulation constellation diagrams in the different modulation constellation diagrams.

13. The method according to claim 12, wherein a range of the phase shift is ($-\frac{\pi}{2} + 2\pi p$, $2\pi p$) or ($2\pi p$, $\frac{\pi}{2} + 2\pi p$), and $p$ is an integer.

14. The method according to claim 1, wherein the method further comprises:
sending, by the sending apparatus, first indication information, wherein the first indication information indicates the different modulation constellation diagrams.

15. The method according to claim 14, wherein the first indication information comprises a phase shift between any two modulation constellation diagrams in the different modulation constellation diagrams.

16. The method according to claim 14 or 15, wherein the first indication information is carried in radio resource control RRC signaling, and the RRC signaling further comprises indication information of start time of the first signal.

17. The method according to claim 16, wherein the indication information of the start time of the first signal comprises the start time of the first signal or a time offset from the first indication information, and the time offset indicates the start time of the first signal.

18. The method according to any one of claims 1 to 17, wherein the time domain unit is an orthogonal frequency division multiplexing OFDM symbol, a slot, a subframe, a frame, or a mini-slot.

19. A communication apparatus, comprising a processor and a memory, wherein the memory is configured to store a computer program or instructions, and the processor is configured to run the computer program or the instructions to perform the method according to any one of claims 1 to 18.

20. A computer-readable storage medium, wherein the computer-readable storage medium stores a computer program or instructions, and the computer program or the instructions are configured to implement the method according to any one of claims 1 to 18.

100

FIG. 1

200

Sending apparatus

Receiving apparatus

S201: Obtain a to-be-modulated bit sequence

S202: Modulate the to-be-modulated bit sequence, to obtain modulation symbols

S203: Generate a signal based on the modulation symbols

S204: Amplify the signal via a power amplifier, to obtain an amplified signal

S205: Amplified signal

S206: Process the amplified signal

FIG. 2

300

```
┌─────────────────────┐                          ┌─────────────────┐
│ Sending apparatus   │                          │   Receiving     │
│                     │                          │   apparatus     │
└─────────────────────┘                          └─────────────────┘
```

S301: Generate a plurality of modulation symbols, where the plurality of modulation symbols correspond to different time domain units, a same time domain unit corresponds to at least two modulation symbols in the plurality of modulation symbols, and at least two modulation symbols in the plurality of modulation symbols are obtained through modulation based on different modulation constellation diagrams

S302: Generate a first signal based on the plurality of modulation symbols

S303: First signal ⟶

S304: Process the first signal

FIG. 3

Time domain unit 1

Time domain unit 2

■ Modulation symbol obtained based on a modulation constellation diagram 1

☐ Modulation symbol obtained based on a modulation constellation diagram 2

FIG. 4

Time domain
unit 1

Time domain
unit 2

■ Modulation symbol obtained based on a
modulation constellation diagram 1

□ Modulation symbol obtained based on a
modulation constellation diagram 2

FIG. 5

Time domain
unit 1

Time domain
unit 2

■ Modulation symbol obtained based on a
modulation constellation diagram 1

□ Modulation symbol obtained based on a
modulation constellation diagram 2

FIG. 6

Modulation
constellation diagram 1

Modulation
constellation diagram 2

Modulation
constellation diagram 3

FIG. 7

Data processing
apparatus 800

Processing unit 810

Transceiver unit 820

FIG. 8

Data processing apparatus 900

Processor
910

Memory 930

Transceiver
920

FIG. 9

## INTERNATIONAL SEARCH REPORT

| International application No. |
| --- |
| **PCT/CN2023/096402** |

**A.    CLASSIFICATION OF SUBJECT MATTER**

H04L27/26(2006.01)i

According to International Patent Classification (IPC) or to both national classification and IPC

**B.    FIELDS SEARCHED**

Minimum documentation searched (classification system followed by classification symbols)

IPC: H04L H04W H04Q

Documentation searched other than minimum documentation to the extent that such documents are included in the fields searched

Electronic data base consulted during the international search (name of data base and, where practicable, search terms used)

CNABS, CNTXT, WPABS, ENTXT, VEN, 3GPP: 星座, 多, 不同, 调制, 符号, 时隙, 时域, 时间, 单元, 间隔, 帧, 相位, 相移, 索引, constellation, multi, different, modulate, symbol, slot, time, interval, TTI, frame, phase, index

**C.    DOCUMENTS CONSIDERED TO BE RELEVANT**

| Category* | Citation of document, with indication, where appropriate, of the relevant passages | Relevant to claim No. |
| --- | --- | --- |
| X | US 6782037 B1 (LUCENT TECHNOLOGIES INC.) 24 August 2004 (2004-08-24) claims 1-10, and description, column 1, lines 13-57, and column 3, line 22-column 4, line 67, and column 7, lines 1-17 | 1-20 |
| X | CN 109417451 A (INTERDIGITAL PATENT HOLDINGS, INC.) 01 March 2019 (2019-03-01) description, paragraphs [0130]-[0172], and figures 4-15 | 1-20 |
| X | CN 101296021 A (HUAWEI TECHNOLOGIES CO., LTD.) 29 October 2008 (2008-10-29) description, page 3, paragraphs 2-6 | 1-20 |
| A | CN 114189318 A (HUAWEI TECHNOLOGIES CO., LTD.) 15 March 2022 (2022-03-15) entire document | 1-20 |
| A | US 8665949 B1 (MARVELL INTERNATIONAL LTD.) 04 March 2014 (2014-03-04) entire document | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 July 2023** | **12 July 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

<div align="center">

**INTERNATIONAL SEARCH REPORT**
**Information on patent family members**

</div>

| International application No. |
| --- |
| **PCT/CN2023/096402** |

| Patent document cited in search report | | | Publication date (day/month/year) | Patent family member(s) | | | Publication date (day/month/year) |
| --- | --- | --- | --- | --- | --- | --- | --- |
| US | 6782037 | B1 | 24 August 2004 | JP | 2001069190 | A | 16 March 2001 |
| | | | | KR | 20010039762 | A | 15 May 2001 |
| | | | | EP | 1073229 | A1 | 31 January 2001 |
| CN | 109417451 | A | 01 March 2019 | US | 2019150117 | A1 | 16 May 2019 |
| | | | | WO | 2017200842 | A2 | 23 November 2017 |
| | | | | JP | 2019521568 | A | 25 July 2019 |
| | | | | KR | 20190017761 | A | 20 February 2019 |
| | | | | JP | 2022109308 | A | 27 July 2022 |
| | | | | EP | 3455993 | A2 | 20 March 2019 |
| | | | | KR | 20220027269 | A | 07 March 2022 |
| | | | | CN | 114615124 | A | 10 June 2022 |
| CN | 101296021 | A | 29 October 2008 | | None | | |
| CN | 114189318 | A | 15 March 2022 | WO | 2022057568 | A1 | 24 March 2022 |
| US | 8665949 | B1 | 04 March 2014 | US | 9461858 | B1 | 04 October 2016 |
| | | | | US | 9729369 | B1 | 08 August 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210704831